# EUROPEAN PATENT SPECIFICATION

(11) **EP 4 230 516 B1**
(45) Date of publication and mention of the grant of the patent: **23.07.2025**
(21) Application number: 23171527.7
(22) Date of filing: 25.05.2017
(51) Int. Cl.: B63H 1/26, F01D 5/14

(54) **PROPELLER**
PROPELLER
HÉLICE

(30) Priority: 27.05.2016 US 201662342284 P; 18.05.2017 US 201762508139 P
(43) Date of publication of application: 23.08.2023
(62) Divisional of application: 21174055.0
(73) Proprietor: Sharrow Engineering LLC, Philadelphia, PA 19103 (US)
(72) Inventor: SHARROW, Gregory Charles, Cherry Hill, 08034 (US)
(74) Representative: Grünecker Patent- und Rechtsanwälte PartG mbB

(56) References cited:
- EP-A1- 1 365 106
- US-A1- 2015 037 157
- KLEIN I: "BIONIK FUER DIE MARITIME WIRTSCHAFT", SCHIFF UND HAFEN, SEEHAFEN VERLAG GMBH, DE, vol. 59, no. 3, 1 January 2007 (2007-01-01), pages 90/91, XP001542137, ISSN: 1436-8498

## Description

### TECHNICAL FIELD OF THE INVENTION

The invention relates to methods of manufacturing propellers that may be used, for example, for_aircraft, watercraft, turbines, unmanned aerial vehicles and air circulation devices.

### PRIOR ART

EP 1 365 106 A1 discloses a propeller with closed loop blades. US 2015/037157 A1 discloses a propeller comprising a plurality of blades wherein a section side of the blade unit of a blade at the downstream side is located in a position closer to the pressure side of the blade units at the upstream rather than the suction side of the blade units at the upstream. I. Klein, "BIONIK FUER DIE MARITIME WIRTSCHAFT", SCHIFF UND HAFEN, SEEHAFEN VERLAG GMBH, DE, (20070101), vol. 59, no. 3, presents a compendium on maritime bionics including information on propellers used for ships.

### SUMMARY

It is provided a method of manufacturing a propeller having a plurality of blades, each of the plurality of blades having an intake portion, an exhaust portion, and a tip portion extending from the intake portion to the exhaust portion, the method comprising: defining a plurality of parameter sections by selecting some of the parameters including skew angle, roll angle, rake, radius, pitch angle, vertical angle values, defining a parameter section at the transition from the intake portion to the tip portion by parameters to cause the amount of non-axial lift in the tip portion to be greater than the axial lift in the tip portion, defining parameter sections to include a roll value of 90 degrees in the tip portion and extrapolating between parameter sections to form smooth lines to form a blade configured to form a loop when attached to a hub.

### DESCRIPTION OF THE DRAWINGS

For further detail regarding illustrative examples of propellers that can be manufactured by the herein disclosed methods of manufacturing propellers, reference is made to the detailed description provided below, in conjunction with the following illustrations.
FIGS. 1A-E depict various views of an illustrative propeller.
FIG. 2 depicts a parameter sections defining a propeller blade.
FIG. 3 depicts a blade parameter section geometry.
FIGS 4A-F depict measurements of rake for parameter sections in the intake portion, tip portion and exhaust portion of a propeller blade.
FIGS. 5A-F depict measurements for skew angle and vertical angle of parameter sections in the intake portion, tip portion and exhaust portion of a propeller blade.
FIG. 6 depicts an example fluid flow around propeller blades.
FIGS. 7A-D depict examples of alpha and radius values for selected parameter sections.
FIGS. 8A-H depict illustrative values or relative values of various parameters that define a parameter section or a blade.
FIGS. 9A-F depict pitch angles for selected parameter sections of the blades.
FIGS. 10A-B depict views of a turbofan.
FIG. 11 depicts an unmanned aerial vehicle.

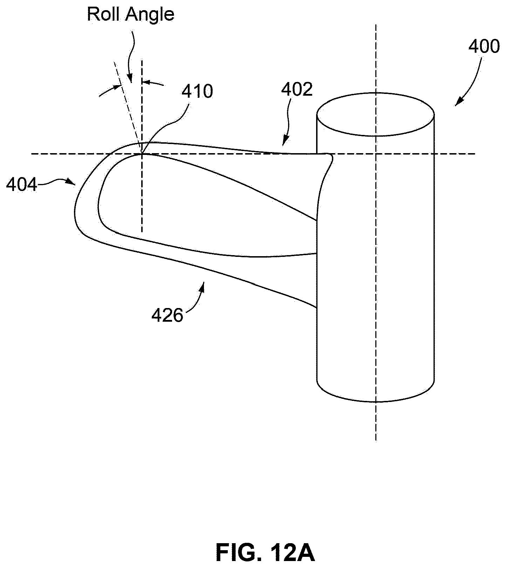

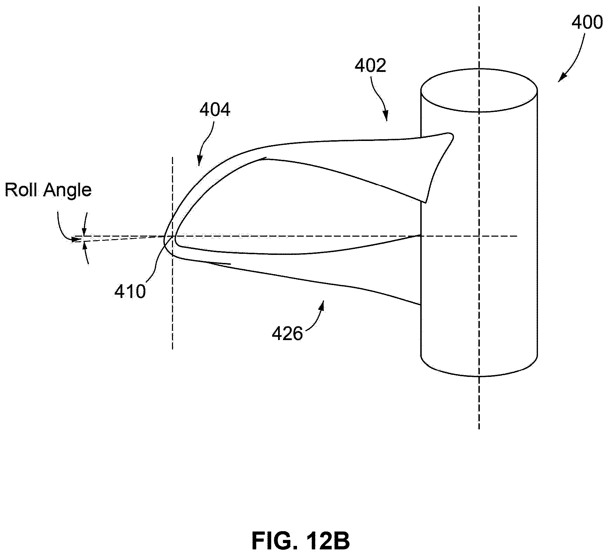

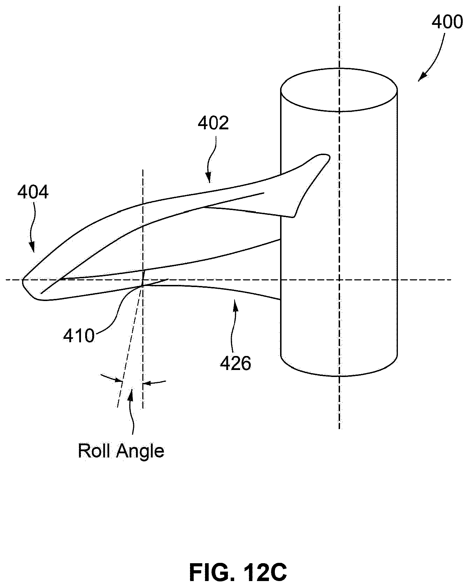

FIGS. 12A-C depict roll angle for selected parameter sections.
FIGS. 13A-F depict a propeller without a hub and having a ring from which propeller blades extend.
FIGS. 14A-B depict a two blade propeller and a cross-section thereof.
FIGS. 15A-B depict a three blade propeller and a cross-section thereof.
FIGS. 16A-B depict a five blade propeller and a cross-section thereof.
FIGS. 17A-B depict a seven blade propeller and a cross-section thereof.
FIGS. 18A-F depict an illustrative embodiment of a propeller with a high rake.
FIGS. 19A-F depict a further illustrative embodiment of a propeller with a high rake for intake and exhaust.
FIGS. 20A-I depict an inboard propeller.
FIGS. 21A-F depict a propeller with a through hub exhaust.

### DETAILED DESCRIPTION OF THE INVENTION

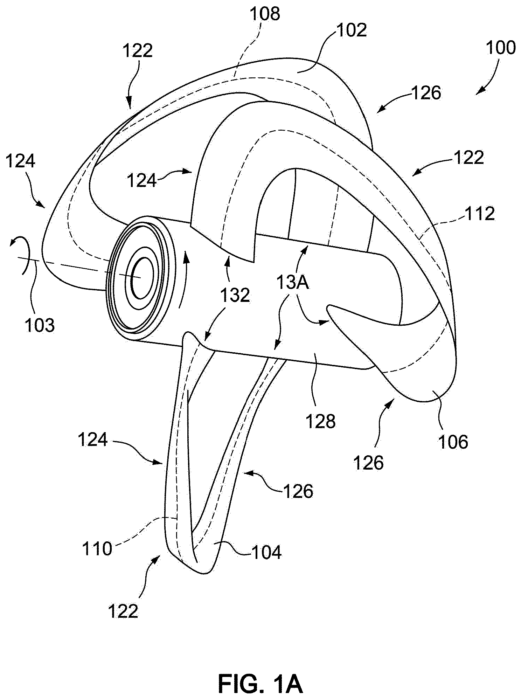

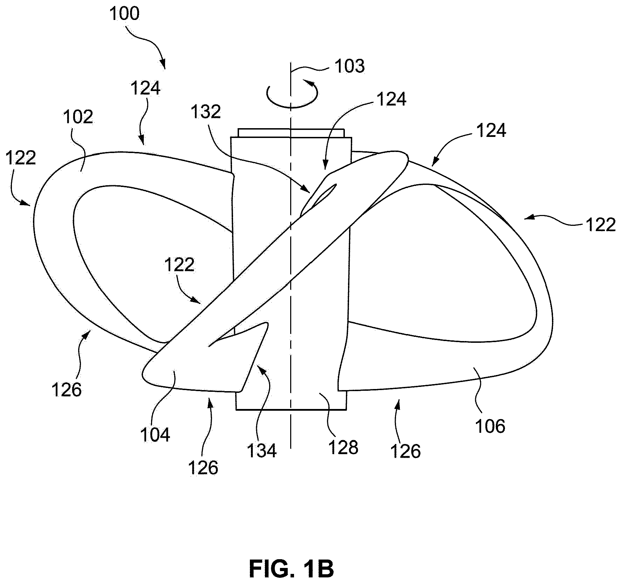

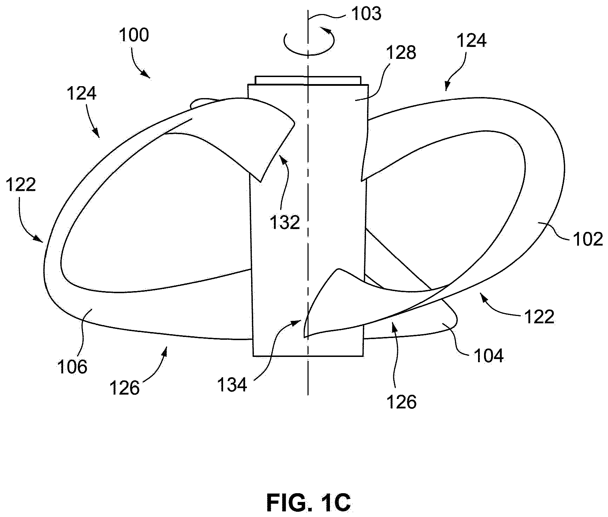

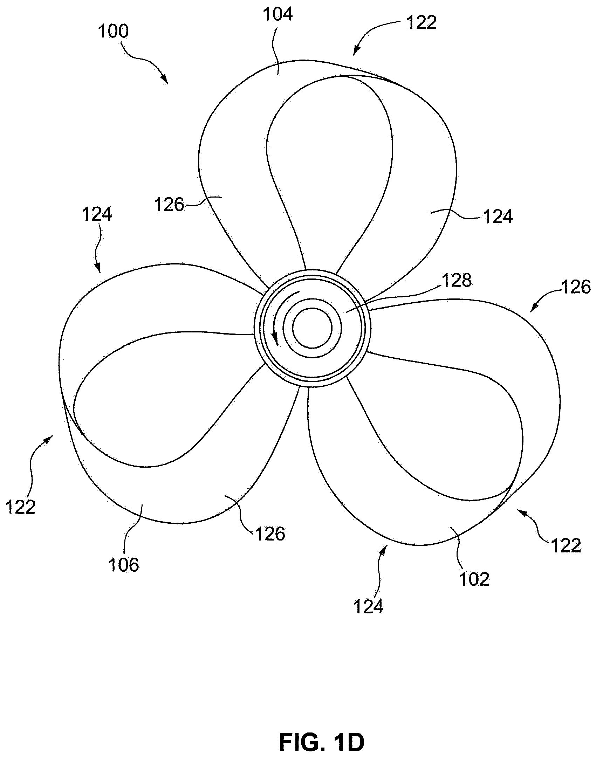

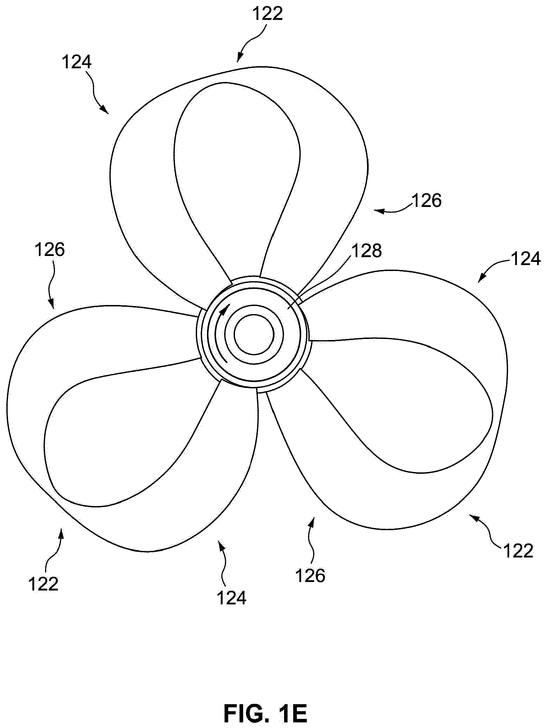

FIGS. 1A-E depict propeller 100 that can be manufactured by a method according to an illustrative embodiment. FIG. 1A depicts a perspective view of propeller 100. FIG. 1B depicts a side view of propeller 100, and FIG. 1C depicts the opposing side of propeller 100. FIGS. 1D and 1E depict a top (fore) view and bottom (aft) view, respectively, of Propeller 100. Propeller 100 includes a plurality of blades 102, 104, 106, each having, an tip portion 122, an intake portion 124 and an exhaust portion 126. In this illustrative example, blades 102, 104 and 106 extend from a hub 128. Each of blades 102, 104, 106 has a median line 108, 110, 112, respectively. Blades 102, 104, 106 rotate about hub axis 103. For simplicity the term "hub" may be used to include any rotational axis, even if there is no physical hub.

The blades have a means for generating non-axial lift and non-axial fluid flow and a means for redirecting the non-axial fluid flow to axial fluid flow. In illustrative examples, the means for generating non-axial lift and non-axial fluid flow is the configuration of the tip portion of the blade, which will be described further below. In illustrative examples the means for redirecting the non-axial fluid flow to axial fluid flow is the configuration of the tip and intake portion, and may also include the exhaust portion, which will also be described in more detail below.

The term "propeller" as used herein may include rotary blade devices that can be used to displace fluid to propel an apparatus, or which are employed in a stationary device such as, for example, a cooling or other air circulating fan, which moves fluid such as air through or around it.

Propeller 100 has three blades 102, 104, 106 disposed at equal increments around hub 128. Disclosed examples of the propeller may have for example, two, three, four, five, six, seven or eight blades that rotate in the same plane. The number of blades will generally depend on the application of the propeller. For example, additional blades may be beneficial for increases in the weight of a boat or airplane in which the propeller is employed to increase the area of the blades, thereby reducing the blade loading.

Blades 102, 104, 106 may be configured to rotate about an axis corresponding to hub axis 103, but in an apparatus in which there is no hub, such as in a configuration in which the blades extend inward from a rotating support. The rotation of the support may be generated by an electromagnetic field. Hub 128 may also be hollow, and may have openings in its surface, such as in a centrifugal fan.

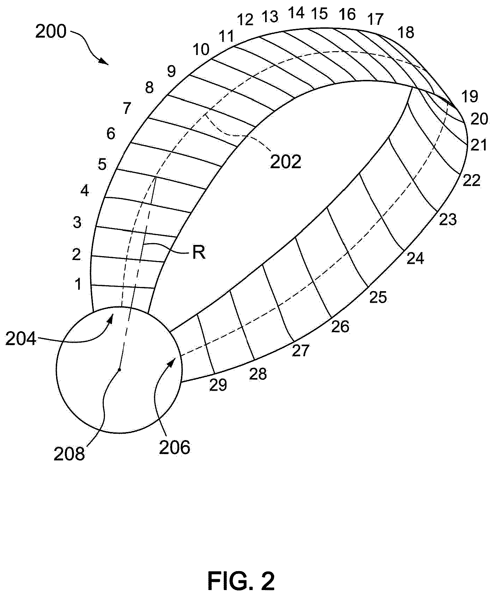

FIG. 2 depicts a blade 200 having parameter sections 1-29, with parameter section 1 in the vicinity of the intake root 204, and parameter section 29 in the vicinity of exhaust root 206. Each parameter section represents a set of physical properties or measurements whose values determine the characteristics of the blade area. The parameter sections as a group determine the shape of blade 200 and its behavior. Parameter sections are equally spaced in an exemplary example but may be selected at unequal intervals. FIG. 2 serves merely to illustrate how blade parameter sections may be laid out to define the blade geometry. Parameter sections represent the shape and orientation of blade 200 at a particular place along the blade. A smooth transition is formed between parameter sections to create a blade. As used herein "orientation" may include location. In the illustrative example in FIG. 2, blade sections 1-29 are planar sections disposed along an irregular helical median line 202. "Irregular helix" is used herein to mean varying from a mathematical helix-defining formula or as a spiral in 3-D space wherein the angle between the tangent line at any point on the spiral and the propeller axis is not constant. The blade may have an irregular, non-helical median line at least in part, or the median line may be an irregular helix throughout.

Although 29 blade sections are shown in FIG. 2, more or fewer sections can be used to define a blade. Additionally, sections may exist within or partially within the hub that are not shown or fully shown. Blades may be defined by planar or cylindrical parameter sections.

Parameter sections 1-29 are defined, for example, by orientation variables, such as roll angle and vertical angle (alpha), and may include location variables; and shape variables, such as chord length, thickness, and camber. Additional illustrative orientation or location variable include rake, skew angle and radius. Some or more of the variables may change through the blade or a blade portion and some may be constant throughout. Orientation variables may be measured with respect to an X-Y-Z coordinate system. The X-Y-Z coordinate system has the origin at the shaft centerline and a generating line normal to the shaft or hub axis 103. The X-Axis is along hub axis 103, positive downstream. The Y-Axis is up along the generating line and the Z-Axis is positive to port for a right handed propeller. A left handed propeller is created by switching the Z-Axis and making a left hand coordinate system.

Parameter sections may be located by their chord (nose-to-tail) midpoint, such as by using radius, rake and skew. Parameter sections may be oriented using the angles Phi, Psi and Alfa, as will be described further below.

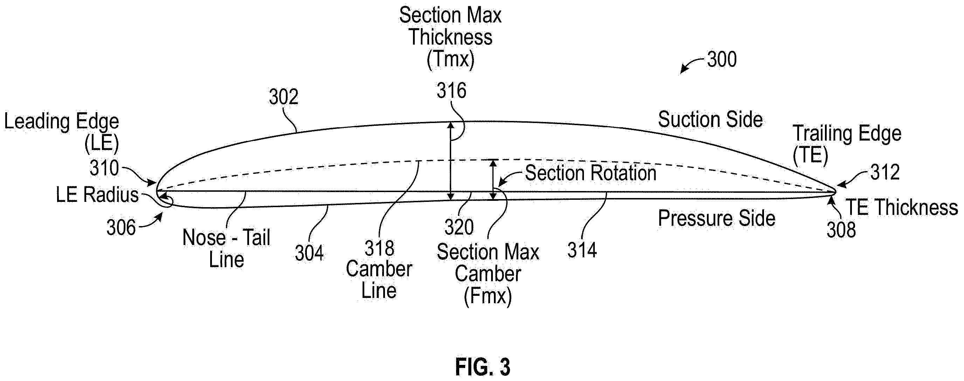

FIG. 3 depicts blade parameter section geometry by reference to a cross-sectional profile of a blade, which could be a parameter section. An illustrative parameter section 300. Parameter section 300 is in the form of an asymmetrical airfoil. The airfoil is bounded by a curved blade surface line 302 and a generally flat blade surface line 304, with a rounded nose 306 at the leading edge 310 of the parameter section and a pointed or less rounded tail 308 at the trailing edge 312 of parameter section 300. Parameter sections may also be in the shape of a symmetrical airfoil. Additional parameter section shapes include, for example, a shape having parallel blade surface lines 302, 304. Blade surface lines 302, 304 may also be linear and at an angle to one another. The nose and tail edges may both be rounded, both be flat (perpendicular to one or both blade surface lines 302, 304) or one of either the nose or tail may be rounded and the other of the two flat. A blade formed of a sheet material, for example, would generally exhibit parallel blade surface lines 302, 304. In an illustrative example of a blade formed of a sheet, the leading edge of the blade is rounded and the trailing edge is flat or less rounded, though both intake and trailing edges could be rounded.

### Illustrative shape variables for parameter sections are defined as follows;

Radius: The term radius is used to define both the shape of a parameter section and its orientation with respect to the X-Y-Z coordinate system. With regard to the parameter section shape, radius may refer to the curvature of the nose 306 of parameter section 300, for example, and thus will be referred to as a "nose radius.". Other points on parameter section 300 may be used to calculate a radius. By way of example, parameter section leading edge radius may be calculated based on maximum thickness 316 and the length of chord 314.

Chord: The chord is the nose-to-tail line 314 of the parameter section.

Thickness: Various thickness measurements may define a parameter section such as, for example, the maximum thickness 316. A further illustrative example is the trailing edge thickness, which may be calculated as a percentage of maximum thickness 316. For example, the trailing edge thickness may be 8% of maximum thickness 316 of parameter section 300.

Camber: Camber 318 defines the curvature of a parameter section.

### Illustrative orientation variables include:

Rake: Rake is the axial location of a parameter section chord midpoint.

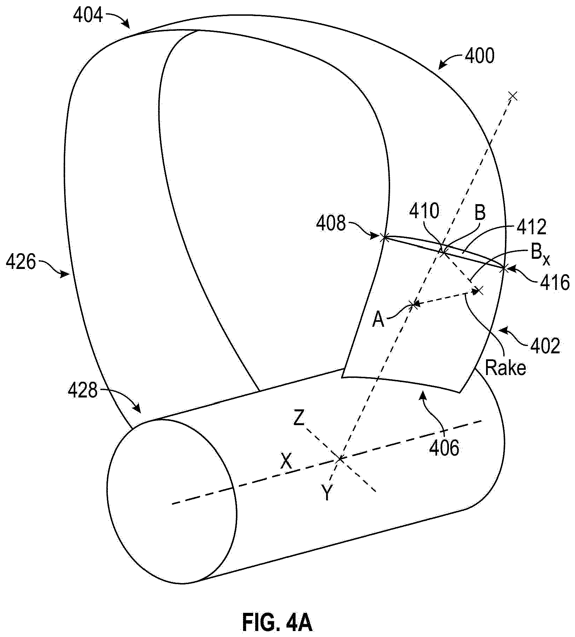

By "axial location" it is meant in this instance, along the X-axis, which is coincident with the propeller rotational axis. Illustrative rake measurements are shown in FIGS. 4A-F for various parameter sections. Each of FIGS. 4A-F show coordinates X, Y and Z, wherein the X-axis is coincident with the propeller rotational axis, and the Y-axis and Z-axis are perpendicular to the X-axis, and the three axes are mutually perpendicular. Parameters are measured from the origin of the coordinate system. In an illustrative example, the zero point of the coordinate system is along the propeller rotational axis, and is closer to the intake root than the exhaust root. Illustratively, values along the X-axis toward the intake root are negative and toward the exhaust root are positive. In general a coordinate system is located as desired and all parameters or geometry are measured from the origin of the selected coordinate system.

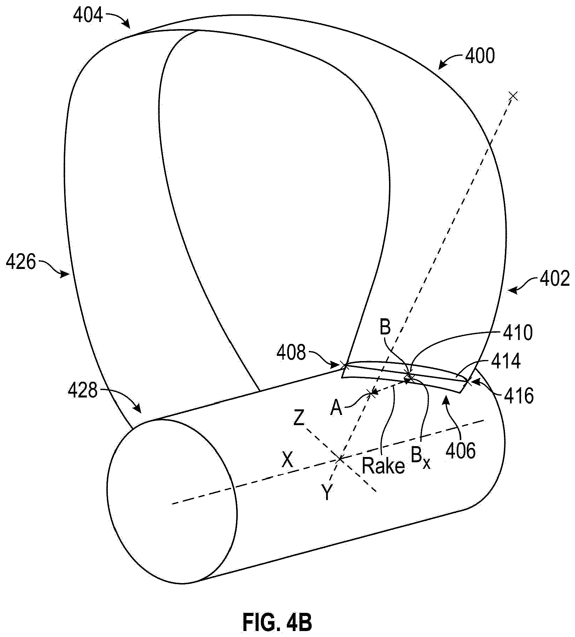

FIGS. 4A and 4B depict Rake for parameter sections 412, 414 on the intake portion 402 of blade 400. Parameter section 412 in FIG. 4A is toward tip portion 404 of blade 400. Parameter section 414 is toward intake root 406. Rake is measured along the propeller rotational axis or along a line parallel to the rotational axis. In the illustrative examples of FIGS. 4A, 4B, Rake is the distance from point A at X equals zero to the X coordinate value of point B, wherein point B is at the midpoint 410 of the chord of parameter sections 412, 414. The X-coordinate value of point B is represented by Bₓ in FIGS. 4A-F..

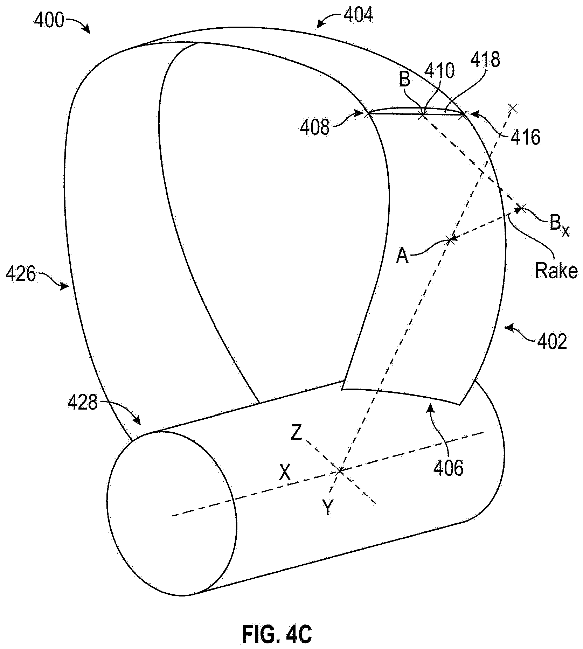

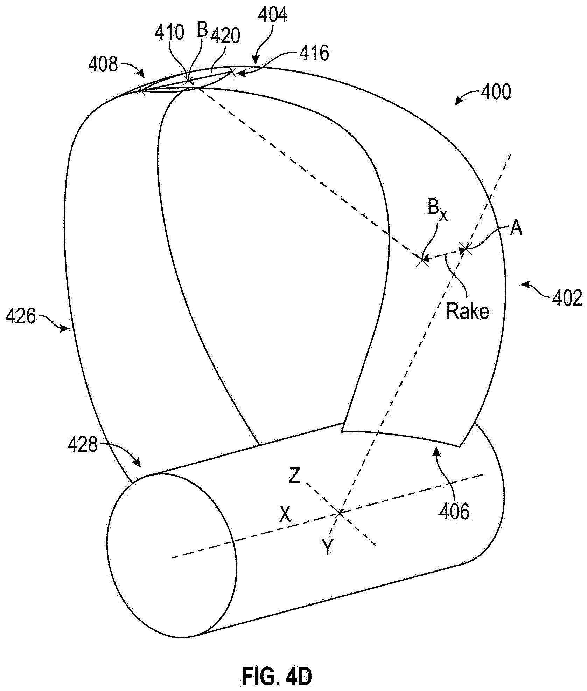

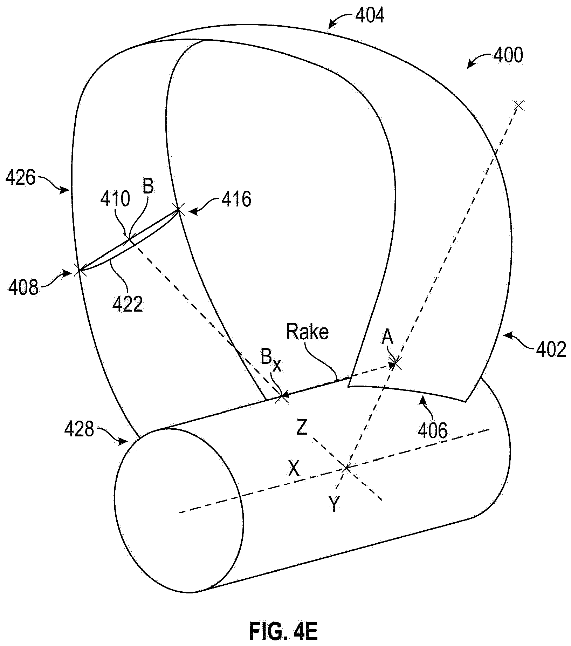

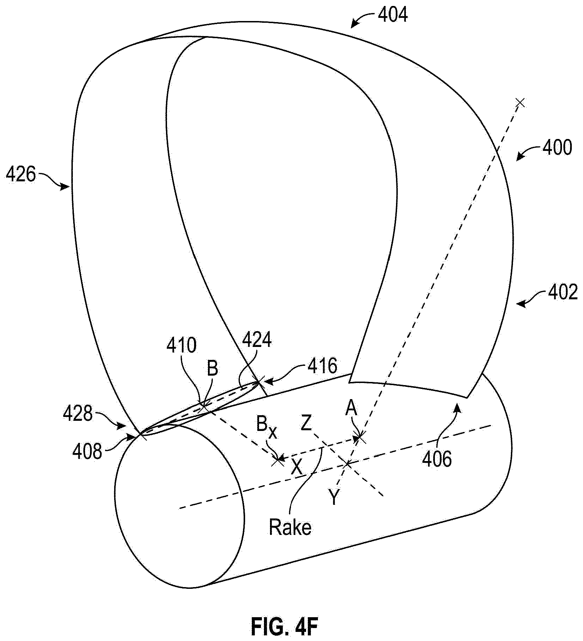

FIGS. 4C and 4D depict Rake for parameter sections 418, 420 on the tip portion 404 of blade 400. Parameter section 418 in FIG. 4C is at a first position in tip portion 404 of blade 400 wherein the roll value (described further below) is greater than zero and less than 90 degrees. Parameter section 420 in FIG. 4D is at a second position in tip portion 404 where the roll value is equal to or greater than 90 degrees. In the illustrative examples of FIGS. 4C, 4D, Rake is the distance from point A at X equals zero to the X coordinate value, Bₓ, of point B, wherein point B is at the midpoint 410 of the chord of parameter sections 418, 420. FIGS. 4E and 4F depict Rake for parameter sections 422, 424 on the exhaust portion 426 of blade 400. Parameter section 422 in FIG. 4E is toward tip portion 404 of blade 400. Parameter section 424 is toward exhaust root 428. In the illustrative examples of FIGS. 4E, 4F, Rake is the distance from point A at X equals zero to the X coordinate value of point B, wherein point B is at the midpoint 410 of the chord of parameter sections 422, 424.

Pitch Angle: Pitch Angle is the angle between the chord line of a parameter section and a plane perpendicular to the X-axis. Pitch angle may be calculated based on pitch distance and blade radius. Examples of pitch angle of parameter sections is provided in FIGS. 4A and 4C. FIGS. 4A and 4C show pitch angle for parameter sections 412 and 418, respectively.

Radius: The orientation radius is the distance from the hub center 208 to the midpoint 320 of chord 314 of a parameter section. Chord 314 may also be referred to as the nose-to-tail line. The radius described in this paragraph will be referred to as the parameter section orientation radius to differentiate it from the nose radius or other parameter section shape radii, which are not measured with respect to the X-Y-Z coordinate system. Midpoint 320 of chord 314 is the point on the parameter section chord line through which the median line 202 would pass. This is illustrated in FIG. 2 by line R which extends from hub center 208 to the midpoint of the chord of parameter section 5. Note that the chord of parameter section 5 and its midpoint are not specifically shown in FIG. 2.

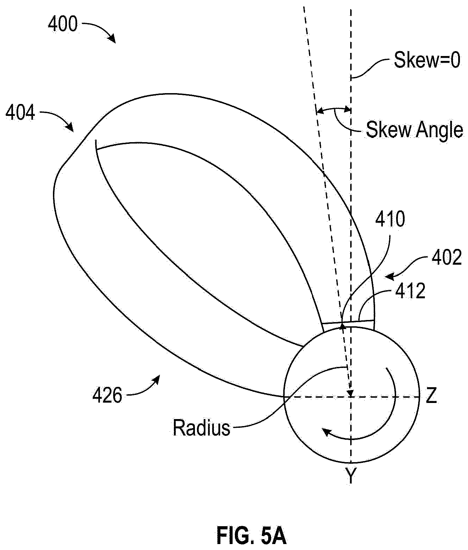

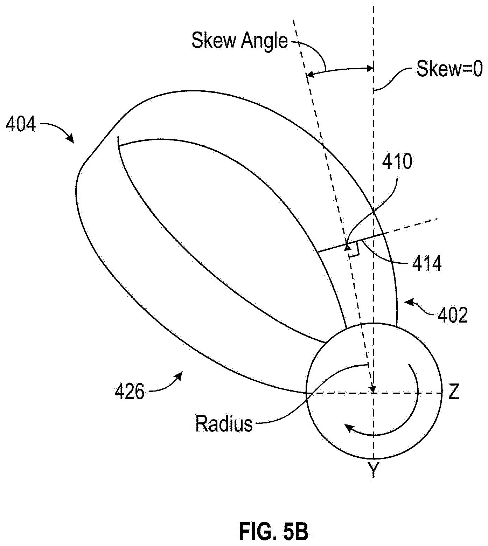

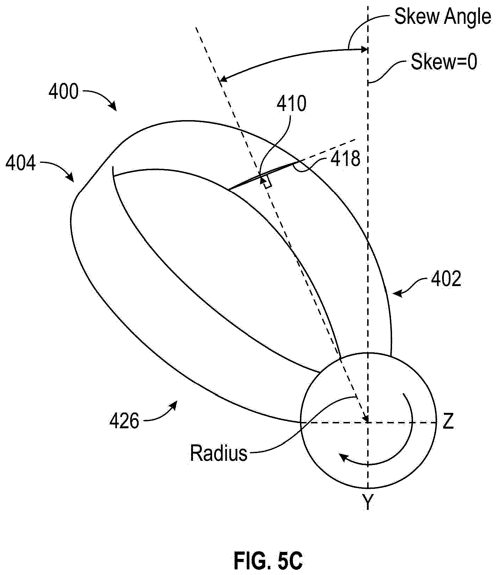

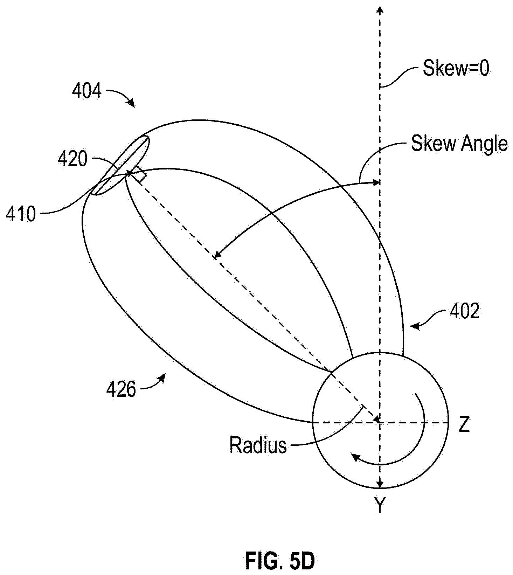

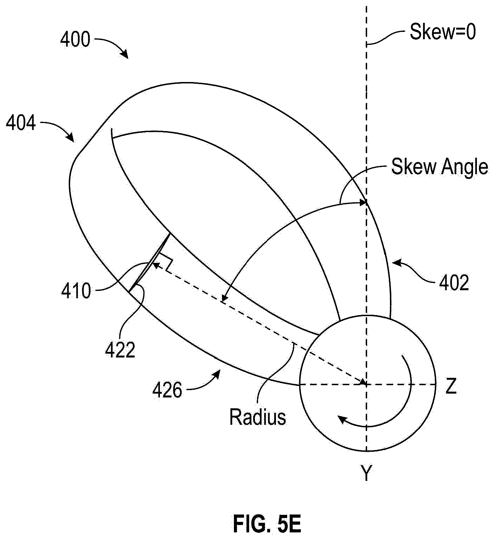

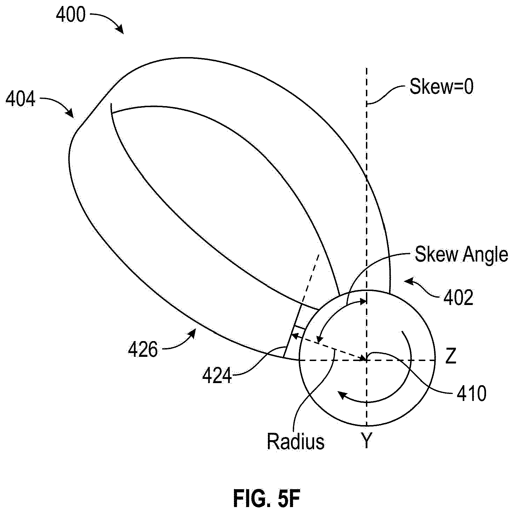

FIGS. 5A-F depict blade 400 viewed along the blade rotational axis X. FIGS. 5A-F identify representative parameter section radii and skew angle. FIG. 5A depicts the radius of parameter section 412 in the intake portion 402 of blade 400. FIG. 5B shows the radius of parameter section 414, a parameter section in intake portion 402 of blade 400 further from intake root 406 than parameter section 412. FIGS. 5C and 5D depict radii for parameter section 418 and 420, respectively, wherein parameter section 418, 420 are in tip portion 404. FIGS. 5E and 5F depict radii for exhaust parameter section 422 and 424, respectively, both within exhaust portion 426. The position of parameter sections 412, 414, 418, 420, 422 and 424 as being in intake portion 402, tip portion 404, or exhaust portion 426 are provided only for ease of discussion. The actual parameter values and resulting fluid flow may define the positions of the sections otherwise.

FIGS. 5A-F further show skew angle of parameter sections 412, 414, 418, 420, 422, 424. Skew angle is the projected angle from a line through midpoint 410 of chord 314 to the generating line, in this illustrative example the Y-axis looking along hub axis 103 (X-axis).

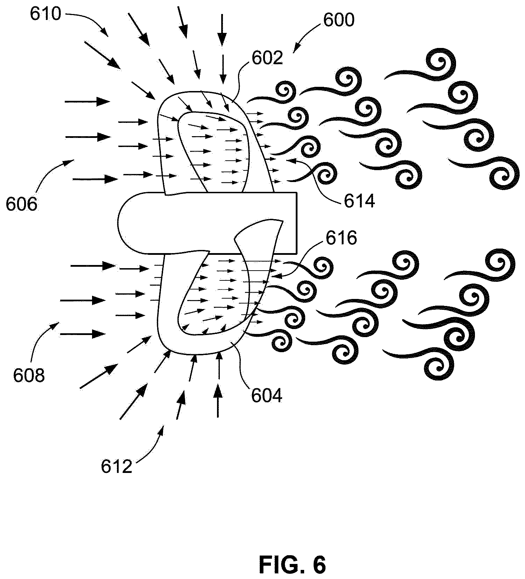

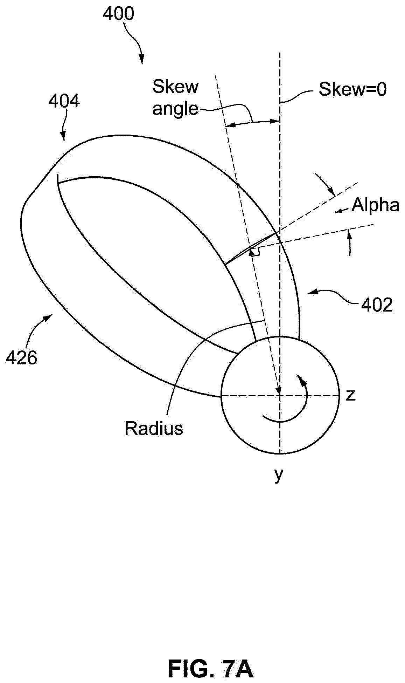

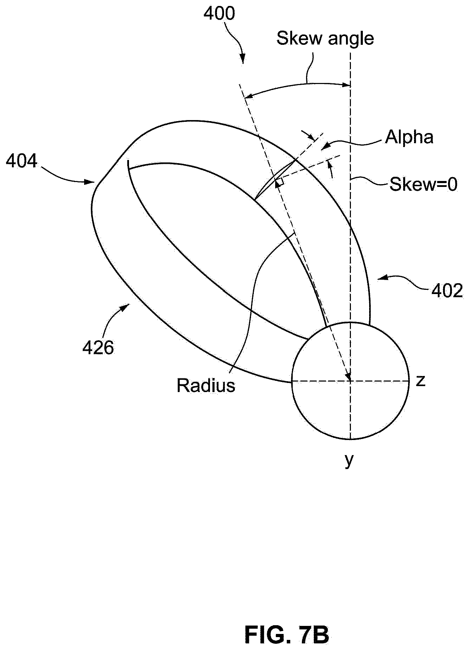

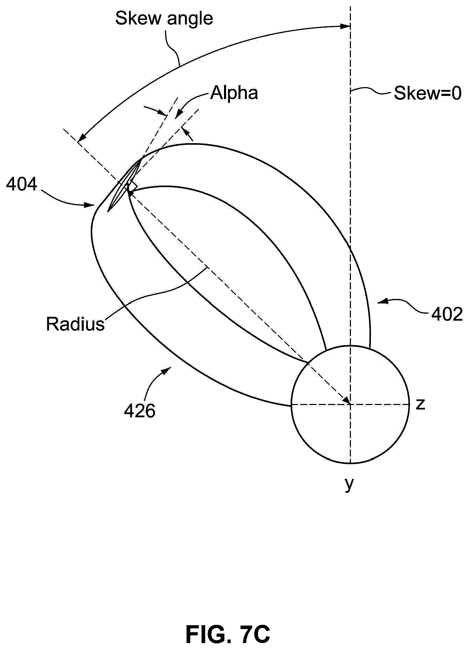

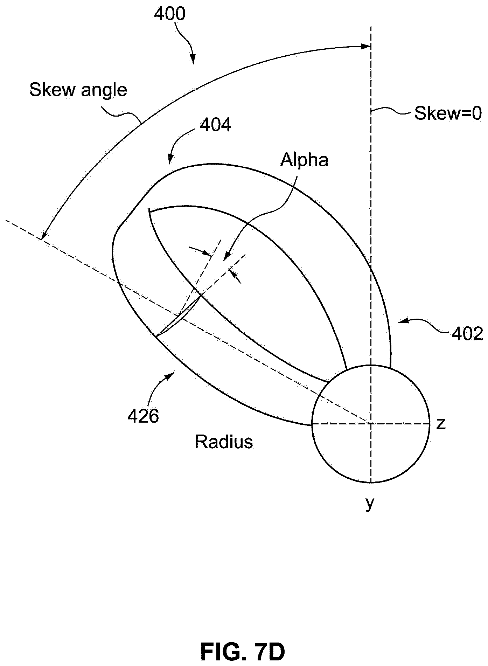

FIGS. 7A-D, in addition to depicting skew angle and radius, depict parameter section vertical angle, Alpha, labeled on each of FIGS. 7A-D. Vertical angle may also be referred to as "lift angle." Alpha is the angle that the parameter section is rotated relative to a line perpendicular to the skew line, which is identified in FIGS. 6A-D and described below. The aforementioned skew line refers to the line together with the zero skew line that forms the skew angle. Depending on the value of Alpha, the nose of the parameter section will either be "lifted" or will "droop" from a line perpendicular to the skew line that forms the skew angle with respect to the zero skew line, wherein the zero skew line is coincident with the Y-axis of the coordinate system identified on FIGS. 7A-D.

It is noted that FIGS. 5A-F do not identify Alpha, because Alpha equals zero. When Alpha is zero, the chord line of the parameter section is perpendicular to the zero skew line. This can be seen by a comparison of FIGS. 5A-F with FIGS. 7A-D.

Roll: Roll is the angle that a parameter section is rotated about its chord line. As described herein, a zero roll value is in a plane parallel to the hub axis. In an illustrative example, roll at intake root 132 is zero, roll at exhaust root 134 is 180 degrees and a roll of 90 degrees is at a location within tip portion 122.

Various illustrative examples will be described by combinations of characteristics. The disclosed propeller includes different combinations of the characteristics, equivalents of the elements and may also include examples wherein not all characteristics are included.

In an illustrative example of a propeller, the propeller includes a plurality of blades in a loop form, generally as shown in FIGS. 1A-E. The propeller in FIG. 1A is referred to only as a general reference to equate particulars with propeller regions. The actual form of the propeller blades will vary according to the parameters and within the ranges specified.

Each blade 102, 104, 106 of propeller 100 includes a tip portion 122, an intake portion 124 and an exhaust portion 126. In an illustrative example, the intake portion is 0-45% of the blade, the tip portion is 30%-75% of the blade and the exhaust portion is 50 percent to 90 percent of the blade.

Propeller 100 may have various number of blades, each preferably with the same characteristics and parameters, although variations between blades is within the scope of the examples. An illustrative number of blades is between two and twelve, although more blades may be included in a single propeller. In particular examples a propeller may have three, four, five, seven or eleven blades. In a propeller example having looped blades, the blades have an intake root 132 at hub 128 and an exhaust root134 at hub 128. Intake portion 124, tip portion 122 and exhaust portion 126 together may form a closed loop or the loop may be opened at the intake "root" or exhaust "root."

Roll: The roll angle (Psi) is the orientation angle about chord 314, for example. Referring back to FIGS. 1A-F, intake portion 124 extends from hub 128 generally outward for a propeller with a hub 128. Intake portion 124 may have a roll of zero at intake root 132. Intake portion 124 is configured to create axial lift only or more axial lift than non-axial lift. The roll value for all parameter sections in intake portion 124 may be zero. Illustrative roll value ranges for parameter sections in intake portion 124 include zero at intake root 132 progressing to between about 1 degree to 35 degrees where intake portion 124 transitions to tip portion 122. Additional ranges of roll value for intake portion 124 from intake root 132 to tip portion 122 include: from zero to between about 5 degrees to 25 degrees, and from zero to between about 10 degrees to 20 degrees.

Tip portion 122 may also be defined by a tip portion intake end that begins at the first deviation from zero of roll value and extends to a tip portion exhaust end that begins at a roll value of 90 degrees or just greater than 90 degrees.

Tip portion 122 is configured to generate non-axial lift only, more non-axial lift than axial lift, or more non-axial lift than intake portion 124. The roll value of parameter sections in tip portion 122 will transition from less than 90 degrees to greater than 90 degrees. Illustrative roll value ranges of tip portion 122 include between 1 degree and 46 degrees at the transition from intake portion 124 through between 91 and 150 degrees where tip portion transitions to exhaust portion 126. Additional illustrative roll value ranges of tip portion 122 include beginning at the transition from intake portion 124, between 5 degrees and 25 degrees and transitioning to a roll of between 110-135 degrees.

In an illustrative example the transition from intake portion 124 to tip portion 122 occurs when the amount of non-axial lift produced by a given parameter section is greater than the axial lift. In a particular example this transition takes place when roll is 45 degrees, or when roll is in a range of 40 degrees to 50 degrees.

Exhaust portion 126 is configured to generate less non-axial lift than tip portion 122. In an illustrative example, the blade is configured so the average non-axial lift is the greatest in tip portion 122 as compared to either intake portion 124 or exhaust portion 126. In an illustrative example the blade is configured so the average non-axial lift, if any, is greater in exhaust portion 126 than in intake portion 124. Illustrative roll value ranges of exhaust portion 126 include between 91 degrees and 150 degrees at the transition from tip portion 122 to exhaust portion 126 through 180 degrees at exhaust root 134. Additional illustrative ranges include beginning at the transition from tip portion 122, between 91 degrees and 135 degrees and transitioning to a roll of 180 degrees at exhaust root 134.

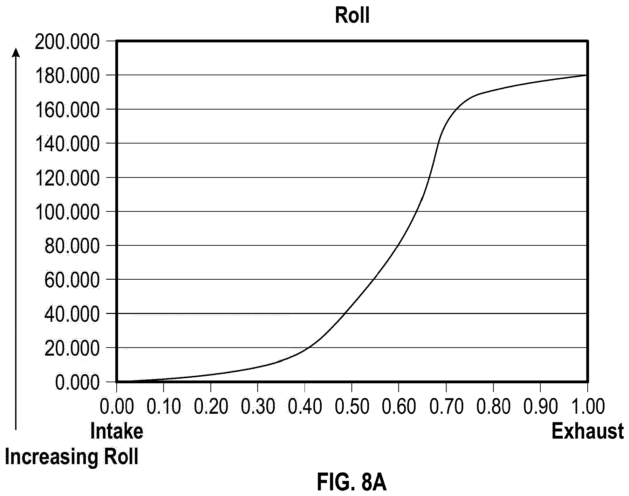

FIGS. 8A-H depict illustrative values or relative values of various parameters that define a parameter section or a blade. FIG. 8A depicts illustrative roll values from an intake root of a blade to exhaust root. In an illustrative example, beginning at intake root 132 through exhaust root 134, parameter section roll transitions from about zero to 5 degrees over the first 25 percent of the blade, from about 5 degrees to about 162 degrees over the next 50 percent of the blade, and from about 165 degrees to about 180 degrees over the last 25 percent of the blade.

In an illustrative example non-axial lift is created by 10 percent to 90 percent of the blade. Further illustrative ranges include 10 percent to 75 percent and 25 percent to 50 percent.

FIG. 6 depicts an illustrative example of a propeller 600 showing fluid flow around blades 602, 604. Intake portions 606, 608 show fluid flow in an axial direction at the intake portions 606, 608 of blades 602, 604, respectively. Fluid flow remains axial as the propeller moves forward or fluid moves through blades 602, 604. Fluid flow is still axial as it departs from the exhaust portions 610, 612 of blades 602, 604, respectively.

Within the tip portion of blades 602, 604 axial thrust is generated from the non-axial lift. Non-axial lift results in a fluid flow into the propeller blade, such as within the interior of the loop. Fluid encounters the leading edge of tip portions 610, 612 non-axially. As fluid is pulled in by the tip portions 610, 612 it is redirected into toward an axial direction within the loops of blades 602, 604. The non-axial lift may cause drag, which is created by the tip portion. As fluid passes the trailing edge of blades 602, 604, in tip portions 610, 612 it is in an axial direction or more toward an axial direction than when it entered the interior of the loops of blades 602, 604.

In an illustrative example, propeller 600 is configured to create mixture of the free stream and jet stream of fluid flow aft of the propeller, wherein the mixing area is greater than the diameter of the propeller, wherein the propeller diameter in this instance is the measurement of the largest span of the propeller through the hub axis.

Referring back to FIGS. 1A-F, tip portions 122, intake portions 124 and exhaust portions 126 do not necessarily extend equal distances, such as along median lines 108, 110, 112. In an illustrative example, intake portions 124 encompass a shorter distance than exhaust portions 126. Therefore, the distance along median line 108, 110, 112 wherein the blade is configured to redirect axial lift to non-axial lift extends a greater distance from exhaust root 134 than from intake root 132. In an illustrative example, intake portion 124 extends a distance in a range of 10 percent to 50 percent of the median line length, exhaust portion 126 extends a distance in a range of 10 percent to 60 percent of the median line length; and tip portion 122 extends a distance of 5 percent to 60 percent of the median line length.

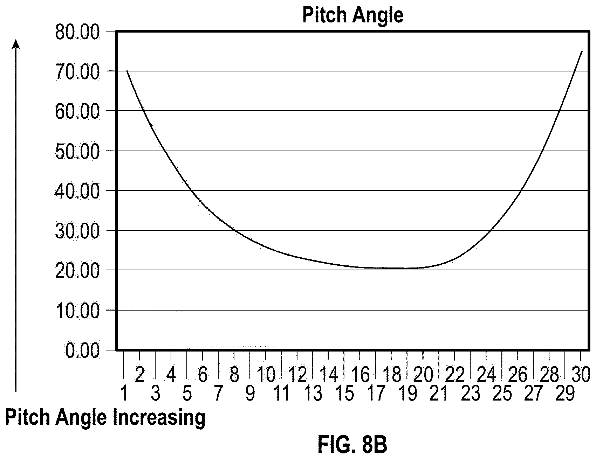

FIG. 8B depicts illustrative relative pitch angle values from an intake root of a blade to exhaust root. In an illustrative example, beginning at intake root 132 through exhaust root 134, parameter section pitch angle transitions from about 70 degrees to about 35 degrees, over the next 50 percent of the blade pitch angle transitions from about 35 degrees to about 25 degrees, and over the last 25 percent of the blade, pitch angle transitions from about 25 degrees to about 75 degrees. In an illustrative example, tip portion 122 has a non-zero pitch angle throughout. In an exemplary example tip portion 122 is defined as and is configured to have non-zero pitch and redirect non-axial lift to create axial thrust.

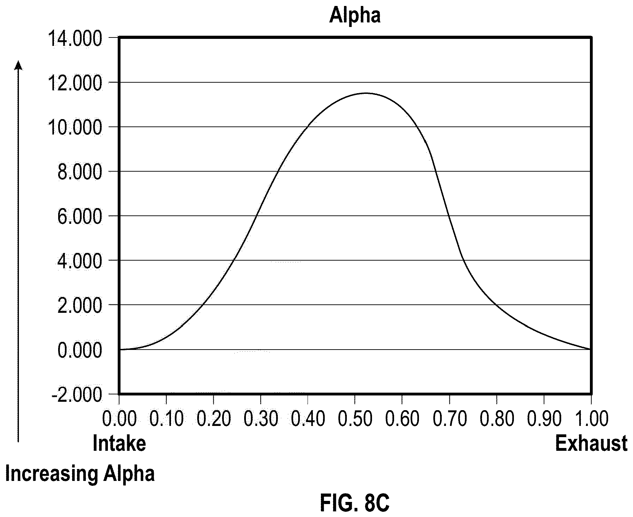

FIG. 8C depicts the vertical angle, Alpha, from an intake root of a blade to exhaust root according to an illustrative example. The vertical angle orients parameter sections away from being perpendicular to skew. In an illustrative example the vertical angle is zero for all parameter sections. In a further example the vertical angle for the intake and tip portions is positive for all parameter sections and the vertical angle for the exhaust portion is negative for all parameter sections. In yet a further example tip portion 122 may have at least one parameter section with a non-zero vertical angle. In other examples, the average vertical angle for the tip and intake portions is greater than the average vertical angle of the exhaust portion.

In an illustrative example the average vertical angle for parameter sections in exhaust portion 126 is greater than the average vertical angle for parameter sections in intake portion 124.

Illustrative ranges of the vertical angle of tip portion 122 includes, 0 to 1 degree, 1 degree to 10 degrees; 4 degrees to six degrees; zero to 5 degrees; 1 degree to 4 degrees; and 2 degrees to 3 degrees. The vertical angle may also be zero throughout the entire blade. The vertical angle at the tip may cause fluid to be drawn in to the interior of the blade "loop" and may thereby cause drag. The vertical angle at the tip may also create fluid flow that is off-axis from the direction of travel which is redirected to axial fluid flow within the loop. The greater the vertical angle in the tip region, the greater the amount of non-axial lift and as a result the greater the amount of non-axial fluid flow into the propeller. The vertical angle of parameter sections in tip portion 122 may create non-axial lift and drag in the vicinity. In illustrative examples, the vertical angle is between -45 degrees and 45 degrees throughout the blade; between -25 degrees and 25 degrees or between -15 degrees and 15 degrees throughout the blade.

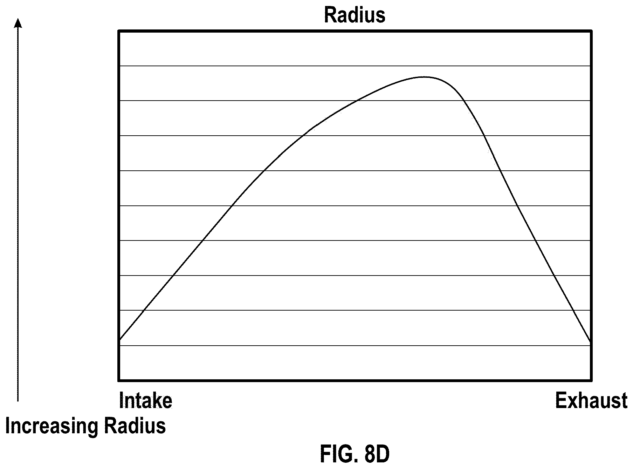

FIG. 8D depicts illustrative relative radius values from an intake root of a blade to exhaust root. In an illustrative example the radius of parameter sections increases throughout the first 60 percent to 80 percent of the blade beginning at intake root 132 and then decreases through parameter sections through to exhaust root 134. As used in this paragraph and elsewhere, parameters transitions over parameter sections correspond to transitions through the blade.

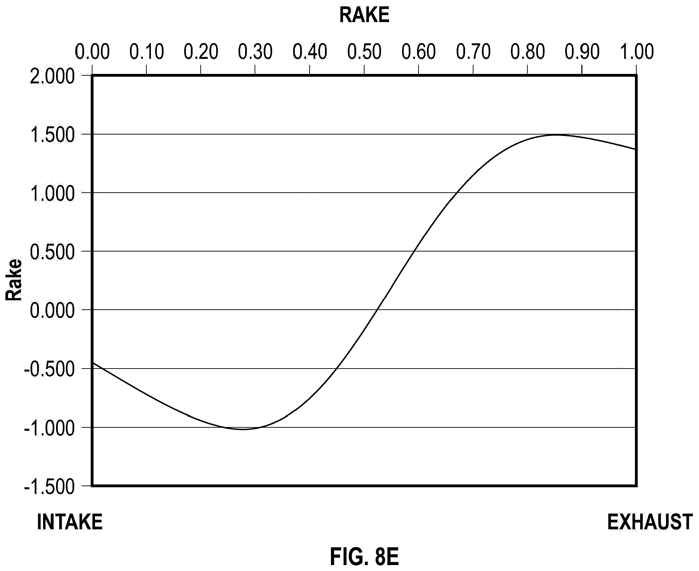

FIG. 8E depicts illustrative rake values from an intake root of a blade to exhaust root. Rake in an exemplary example may be increasingly negative from intake root 132 through the first 30 percent to 40 percent of the blade. Rake may then increase for the next 10 percent to 15 percent of the blade until it reaches positive values. Rake may then continue to increase for an additional 20 percent to 40 percent of the blade and then level off for the remainder of the blade or decrease. Rake may also be linear from the intake root of position of zero to a positive exhaust root value.

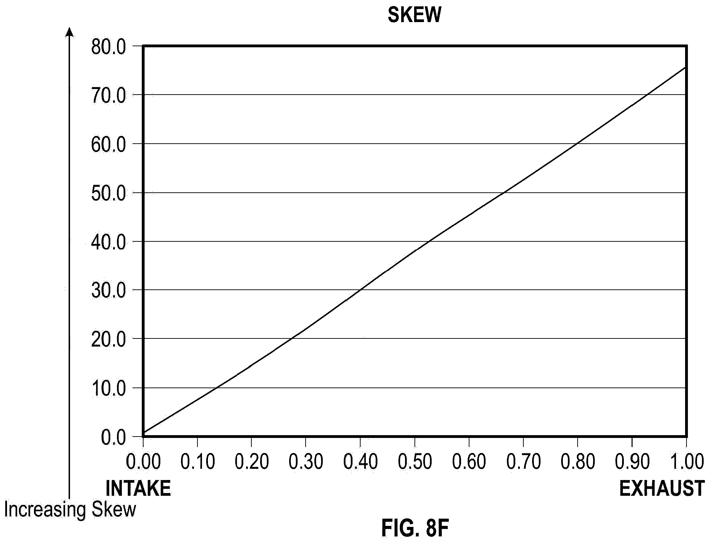

FIG. 8F depicts illustrative relative skew values from an intake root of a blade to exhaust root. In an illustrative example the skew value continually increases from intake root 132 through exhaust root 134. In another illustrative example the skew value may continually decrease so the exhaust portion is forward of the intake and tip portion on its rotational plane. Parameter section chord 314 may be normal to the skew line throughout the blade or in a portion of the blade, wherein the skew line to which chord 314 is perpendicular is the skew line that forms the skew angle with the zero skew line.

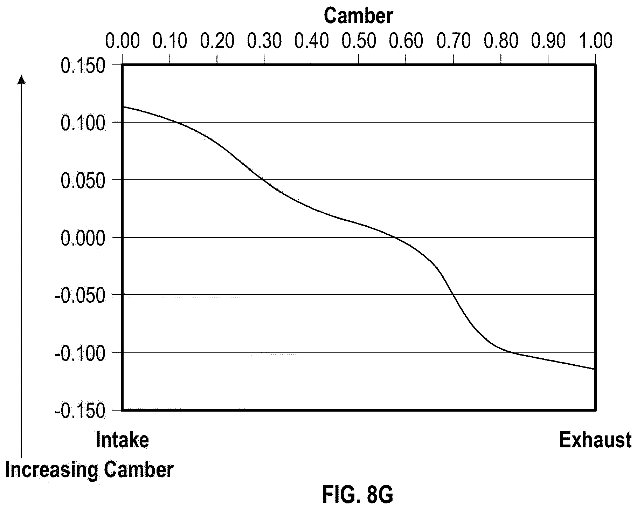

FIG. 8G depicts illustrative relative camber values from an intake root of a blade to exhaust root. In an illustrative example the camber of parameter sections transitions from a positive value at the intake root 132 to a negative value at the exhaust root 134, wherein the suction side of the blade changes to the pressure side of the blade near the transition from the tip portion to the exhaust portion at the interface of positive camber to negative camber.

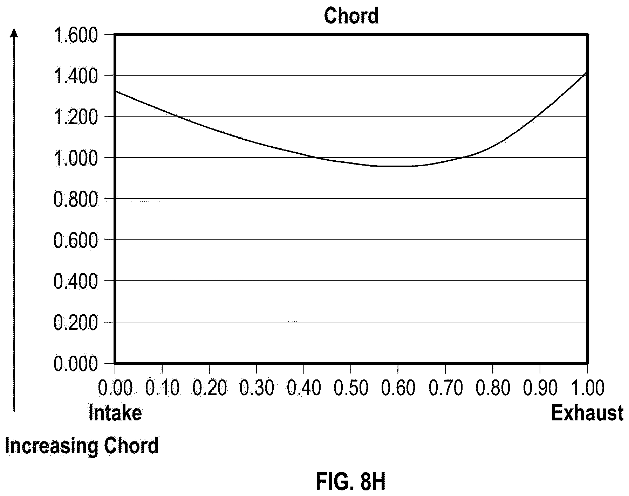

FIG. 8H depicts illustrative relative chord values from an intake root of a blade to exhaust root. In an illustrative example chord decreases from intake root 132 and then begins to increase toward exhaust portion 126 and continues to increase to exhaust root 134.. In other illustrative examples, chord increases from intake root 132 and then decreases toward exhaust portion 126 and continues to decrease to exhaust root 134.

In illustrative examples tip portion 122 from the tip portion intake end to the tip portion exhaust end exhibits one or more of the following characteristics:
- average non-axial greater than average axial lift;.
- non-axial lift from the tip portion intake end to the tip portion exhaust end;
- zero alpha value throughout;
- positive pitch angle throughout;
- positive pitch distance throughout
- positive pitch angle throughout a portion between 70% and 95% of tip portion 122
- a maximum blade radius value within the tip portion extending from a parameter section having a roll value of 80 degrees to a parameter section having a roll value of 95 degrees.

The chart below provides illustrative values for selected parameter sections. The parameter sections are 2, 6, 11, 19, 25 and 29 from a blade defined by 30 parameter sections. Parameter section 2 is the closest of the selected parameter sections to intake root 132. Parameter section 29 is the closest of the selected parameter section to exhaust root 134.

| **Section & Figure Numbers** | **Radius (inches)** | **Pitch (inches)** | **Skew°** | **Pitch Angle (Phi)** | **Roll (Psi)** |
|---|---|---|---|---|---|
| SECT. 2 FIG. 5A | 0.860 | 9.899 | 3.139 | 61.38 | 0.57 |
| SECT. 6 FIG. 5B | 2.000 | 9.396 | 12.615 | 36.79 | 3.34 |
| SECT. 11 FIG. 5C | 3.278 | 9.366 | 25.043 | 24.45 | 11.98 |
| SECT. 19 FIG. 5D | 4.335 | 10.248 | 46.069 | 20.62 | 91.38 |
| SECT. 25 FIG. 5E | 2.674 | 11.197 | 62.206 | 33.68 | 172.24 |
| SECT. 29 FIG. 5F | 0.941 | 12.035 | 73.241 | 63.85 | 178.62 |

SI units: 1 inch = 2,54 cm

FIGS. 5A-F provide a schematic representation of parameter sections 2, 6, 11, 19, 25 and 29, respectively. As noted above, FIGS. 5A-F depict parameter sections having an Alpha value of zero. In an illustrative example these parameter sections may be part of a group of parameter section all having a zero alpha value that form a propeller blade.

Referring to FIGS. 5A-F, it can be seen that the radius increases from parameter section 2 through parameter section 19 and then is decreasing at parameter section 25 through parameter section 29. Pitch, skew and roll increase throughout parameter sections 2, 6, 11, 19, 25 and 29. Pitch angle decreases from parameter section 2 through parameter section 25 and then shows an increase at parameter section 29.

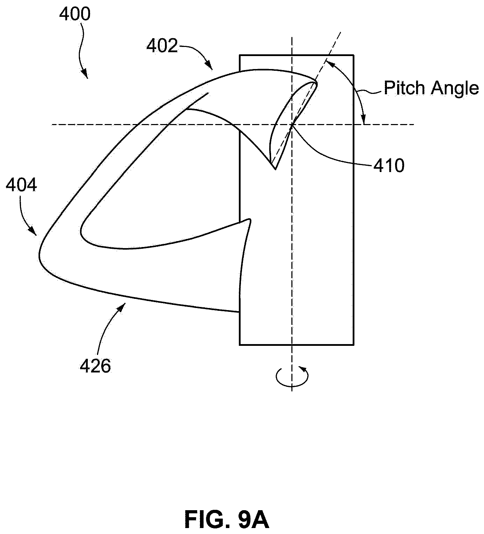

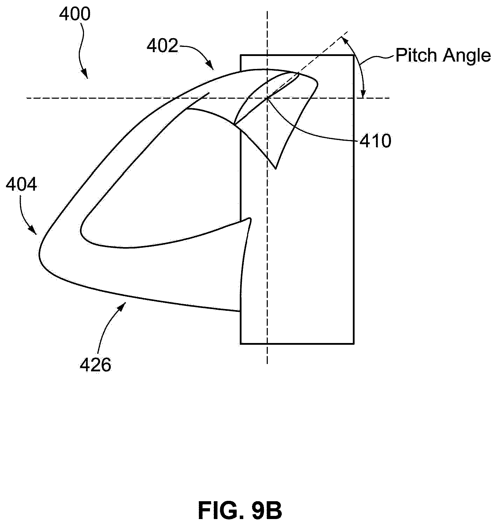

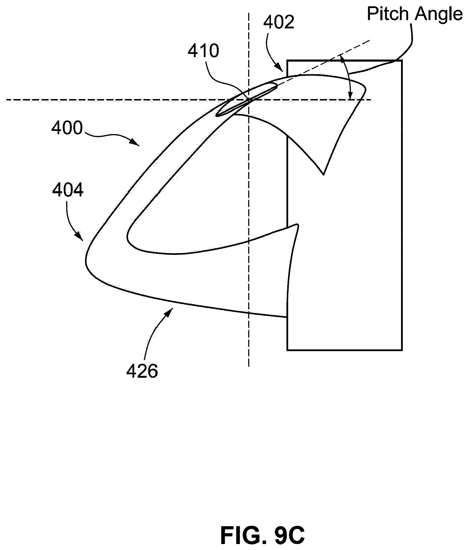

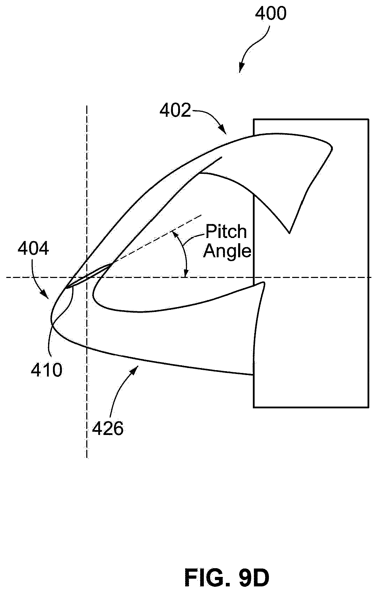

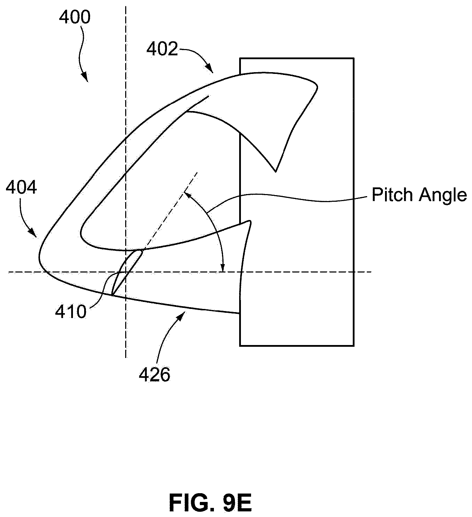

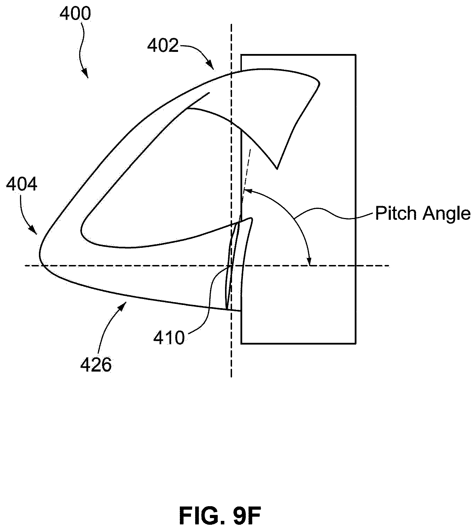

FIGS. 9A-F provide a schematic representation of pitch angle for parameter sections 2, 6, 11, 19, 25 and 29, respectively. Pitch angle varies throughout the blade with the largest values occurring at the intake and exhaust roots.

FIGS. 7A-D depict representations of parameter sections 6, 11, 19 and 25 of 30 parameter sections defining a blade shown in the table below. These parameters include varying Alpha values. The chart below provides illustrative values for the selected parameter sections.

| **Section & Figure Numbers** | **Radius (inches)** | **Pitch (inches)** | **Skew°** | **Pitch Angle (Phi)** | **Roll (Psi)** | **Vertical Angle (Alpha)** |
|---|---|---|---|---|---|---|
| SECT. 6 FIG. 7A | 2.000 | 9.396 | 12.615 | 36.79 | 3.34 | 16.74 |
| SECT. 11 FIG. 7B | 3.278 | 9.366 | 25.043 | 24.45 | 11.98 | 16.34 |
| SECT. 19 FIG. 7C | 4.335 | 10.248 | 46.069 | 20.62 | 91.38 | 11.75 |
| SECT. 25 FIG. 7D | 2.674 | 11.197 | 62.206 | 33.68 | 172.24 | -14.80 |

SI units: 1 inch = 2,54 cm

Radius, Pitch, Skew, Pitch Angle and Roll are given the same values as the illustrative example having Alpha equal to zero. In the example represented by FIGS. 7A-D Alpha decreases through parameter sections 6 through 19 and then becomes negative at a location on the blade between parameter section 19 and 25. This change is illustrated in FIGS. 7A-D.

It is noted that throughout where values are associated with section parameters, the values may define blade portions as each of the intake, tip and exhaust portions are defined herein.

Illustrative examples of the propeller may have one or more of the following characteristics and any characteristics described herein:
- throughout at least a portion of tip portion 122 on the intake side 90 degree roll, the distance (N) to the nose of a parameter section as measured perpendicularly from hub axis 103 is greater than the distance (T) to the tail of the parameter section as measured perpendicularly from the hub axis;
- 80% of the tip portion has a roll value of less than 90 degrees and N>T for the same 80% of the tip portion;
- average pitch angle of exhaust portion 126 is greater than the average pitch of intake portion 124;
- pitch angle varies as roll varies;
- pitch angle is positive throughout the blade;
- length of entire leading edge of propeller blade is greater than the length of the entire trailing edge as measure perpendicularly from the propeller axis;
- first rake position (intake root) is less than the last (exhaust root) rake position thus there is a resulting gap between the intake root and the exhaust root with the exhaust root aft of the intake root;
- skew increases from intake root 132 to exhaust root 134;
- intake root is forward of exhaust root and skew begins at zero and ends at a positive value;
- intake root is aft of exhaust root and skew starts at zero and ends at a negative value;
- the entire intake portion is forward of the exhaust portion except for tip region.
- the greatest thickness of the blade cross-section is between the midpoint of the chord and the leading edge of the cross-section;
- the pressure face continues to turn toward the tip on the intake portion and then becomes suction face on the exhaust portion;
- intake root 132 is in-line with exhaust root 134 so skew is zero;
- substantial mixing of jet stream and free stream downstream of the exhaust blade compared to traditional propellers;
- blades are configured to "effectively increase" the diameter of the propeller by increasing mixture of free stream and jet stream;
- pitch angle of the exhaust blade at its root end is greater than the pitch angle of the intake blade at its root end;
- the tip portion has a 90 degree roll angle closer to the exhaust portion than to the intake portion;
- a gap between the intake portion root and the exhaust portion root;
- chord length of parameter sections varying throughout the blades;
- parameter sections defining the blade are planar and perpendicular to the median line;
- Some or all of the parameter sections defining the blade are non-planar, cylindrical to the median line.
- negative rake in the exhaust portion;
- positive rake in the exhaust portion and
- blades of different configuration are incorporated into a single propeller.

Propeller variations can have the same median line but vary in other parameters. A series of propellers according to illustrative examples can be based on a common median line with varying parameter section pitch, angle of attack, angle, rake, surface area, area ratio, spline form, cross-sectional profile, chord length, vertical angle, roll and other blade parameters.

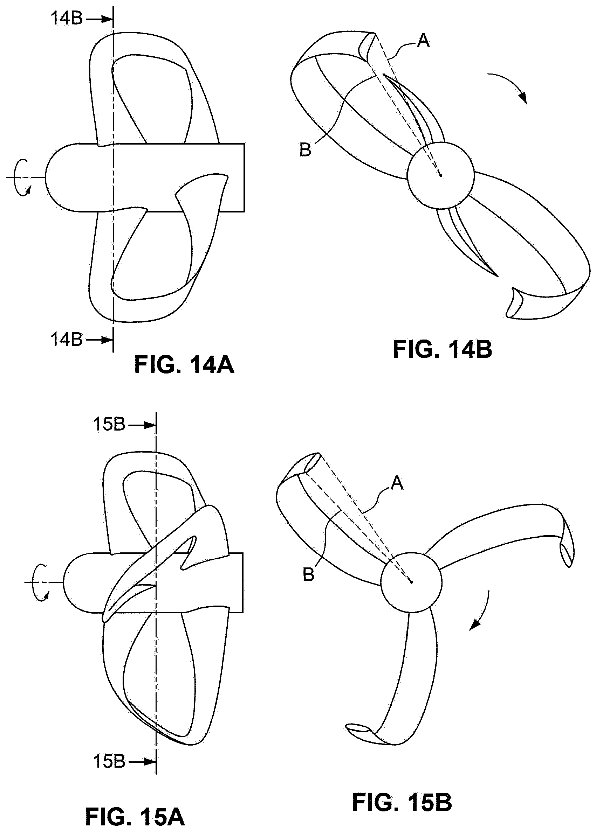

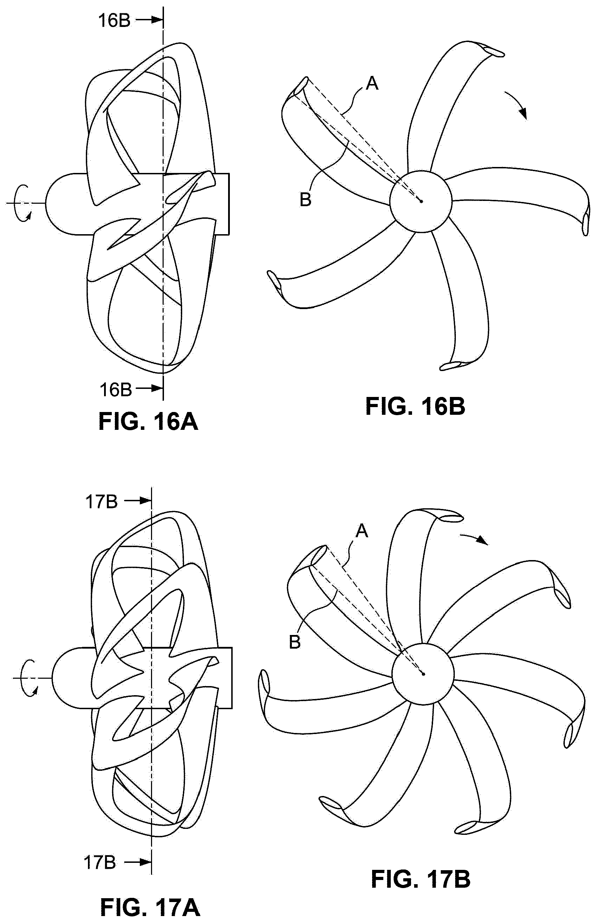

FIGS. 14A-B, 15A-B, 16A-B and 17A-B depict side views and cross-sectional views of propellers with two blades, three blades, four blades and seven blades, respectively. Cross-sections are taken viewed from the propeller fore location along the rotational axis. The cross-sections are generally in tip portion 122 of the blade. As can been seen in each of the cross-sectional drawings, for each cross-sectional profile of the blade, the distance A from the rotational axis to the leading edge of the blade cross section is greater than the distance B from the rotational axis to the trailing edge of the blade cross section in these particular areas of tip portion 122. In an illustrative example A is greater than B for all of tip portion 122. In further illustrative examples A is greater than B for 50 percent to 100 percent of tip portion 122. In a further examples the percent of tip portion 122 that has A greater than B is in the range of 85 percent to 90 percent. In general, the greater the difference between the length of A band B the more fluid will be pulled in from a non-axial direction. Similarly, the greater the percent of the blade that has A greater than B, the more fluid will be pulled in from a non-axial directions.

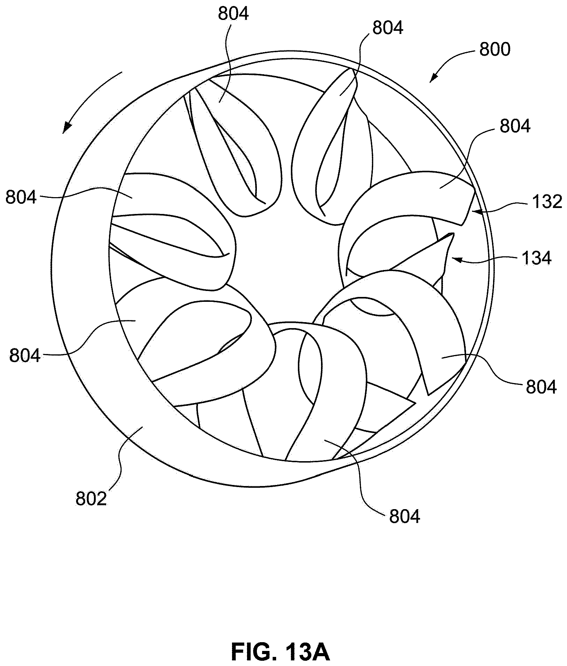

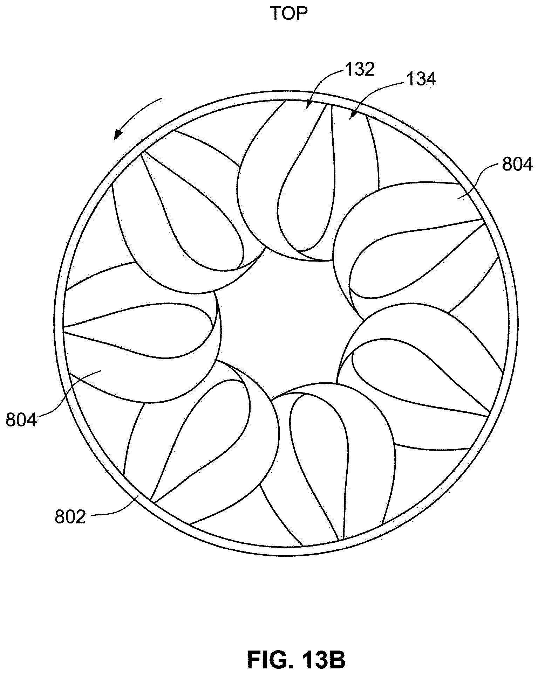

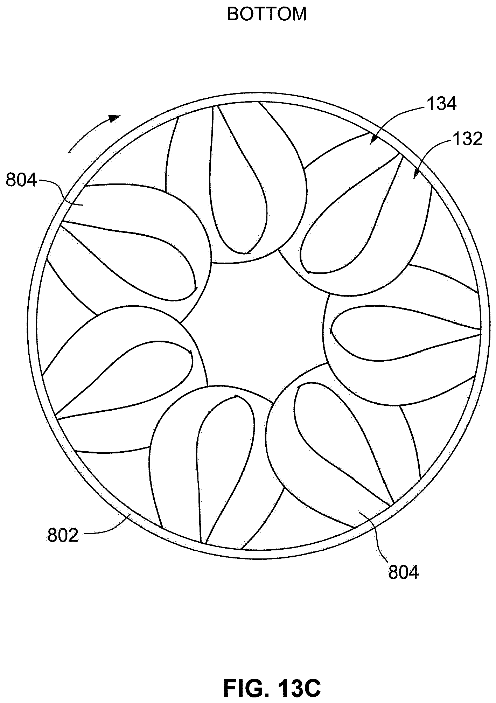

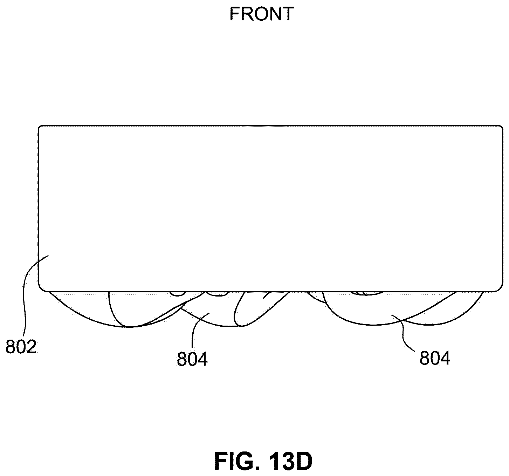

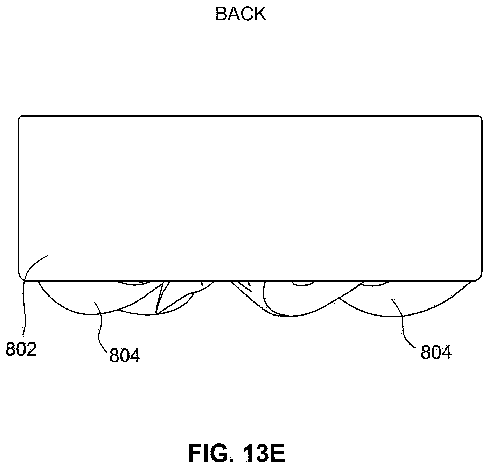

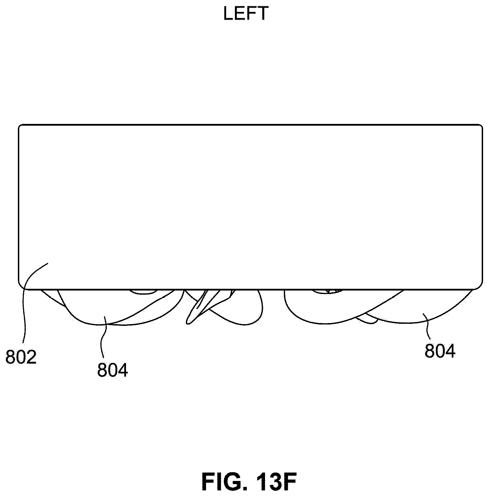

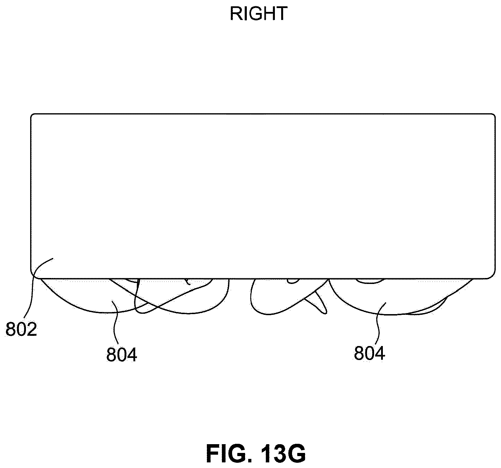

Illustrative examples have been depicted or described as a propeller having a hub. The blades described herein may also be used in a hubless propeller device such as shown in FIGS. 13A-G. FIG. 13A is a perspective view of a "hubless" propeller 800. In this example there are seven blades 804, each having their intake root 132 and exhaust root 134 extending from a rim 802, with tip portion 122 toward the center of the propeller. FIGS. 13B-G show views from the top, bottom, "front," "back," "left," and "right," respectively. The terms "left," "right," "front" and "back" are used for description purposes only to distinguish views from 90 degree intervals around the propeller, but as a circular device, have no literal meaning. The blades follow the same or similar characteristics as propellers with hubs, with some varied air flow due to the rim.

It is disclosed is a method for creating a propeller according to any of the examples described herein. In an exemplary example a plurality of independently modifiable orientation and shape variables are provided to define the orientation and shape of a plurality of parameter sections forming a propeller blade. The shape and orientation variables can be any combination of those disclosed herein. The parameter sections may be planar or cylindrical. In an illustrative example the variables are modified to direct and redirect lift as desired, such as described herein. The configured parameter sections are then used to form a blade by extrapolating between parameter sections to form smooth lines. The method may be used to form any blade as described herein.

Several different devices can be obtained by the inventive method, for example: propulsors, shrouded propellers, encased propellers, impellers, aircraft, watercraft, turbines, including wind turbines, cooling devices, heating devices, automobile engines, unmanned aerial vehicles, turbofans (hydrojets), air circulation devices, compressors, pump jets, centrifugal fans, jet engines and the like. The invention includes methods of manufacturing a propeller, including any of the above-listed devices, according to any of the examples described, pictured or claimed herein.

The ratio of the roll to distance along the median line may be a factor in whether a particular propeller is suitable for an application. For example, a greater roll per given distance creates a more squat blade profile and thus may be more suitable for application as a fan for a cooling or ventilating device.

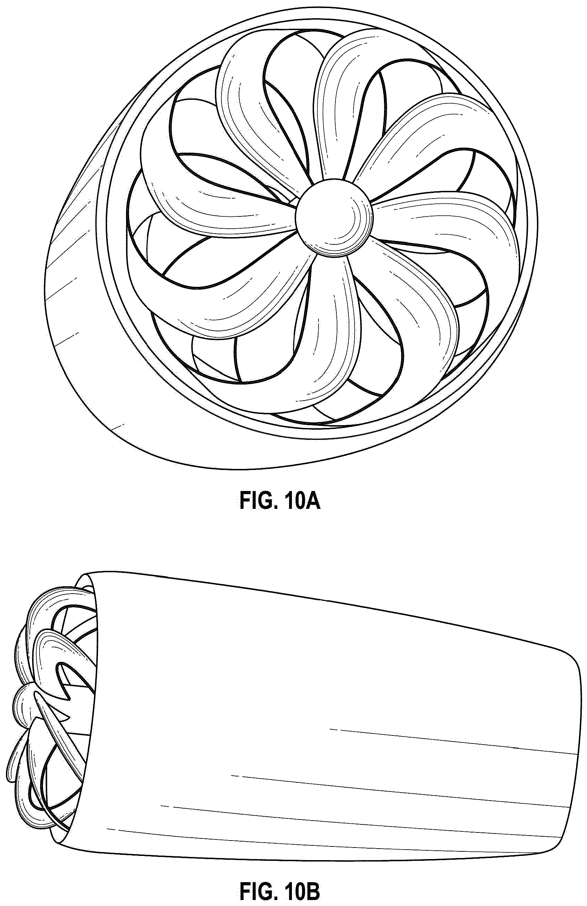

In an illustrative example, a propeller as described herein is incorporated into a turbofan as shown, for example, in FIGS. 10A and 10B. The turbofan may have, for example, between eight and twelve blades. It is noted that the blades depicted in FIGS. 10A-B are not necessarily of a type described herein. The figures are merely provided to indicate the type of device.

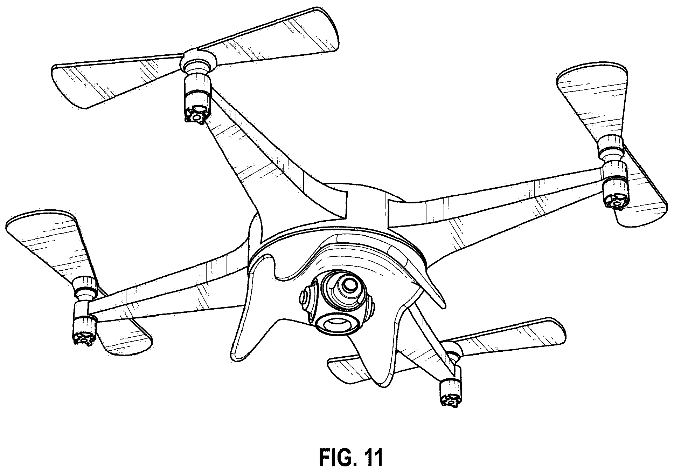

In a further illustrative example a propeller as described herein is incorporated into an unmanned aerial vehicle or device such as shown for example, in FIG. 11. It is noted that the blades depicted in FIG. 11 are not necessarily of a type described herein. The figures are merely provided to indicate the type of device.

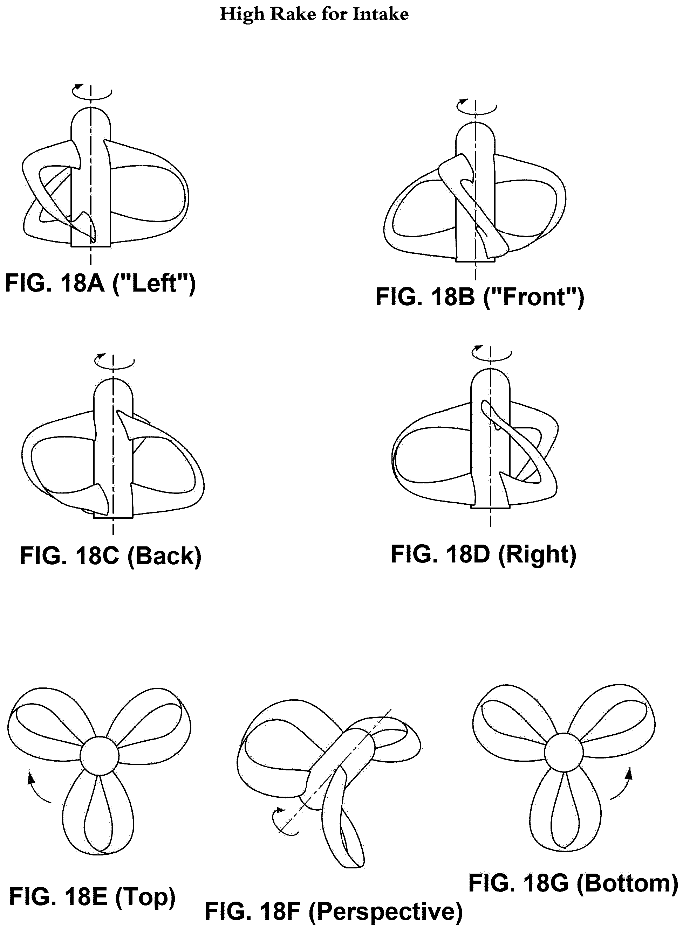

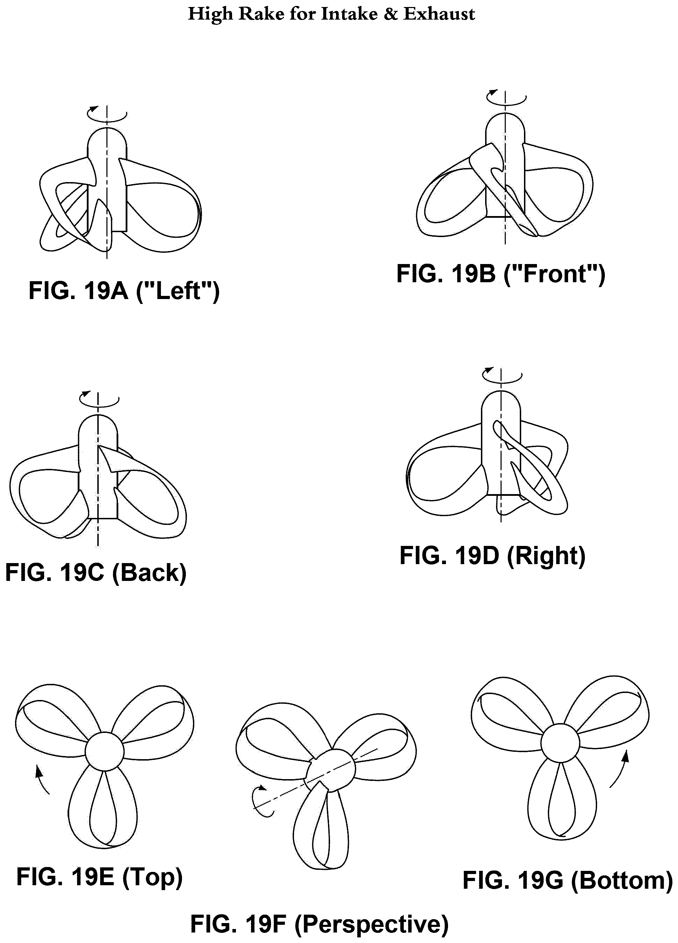

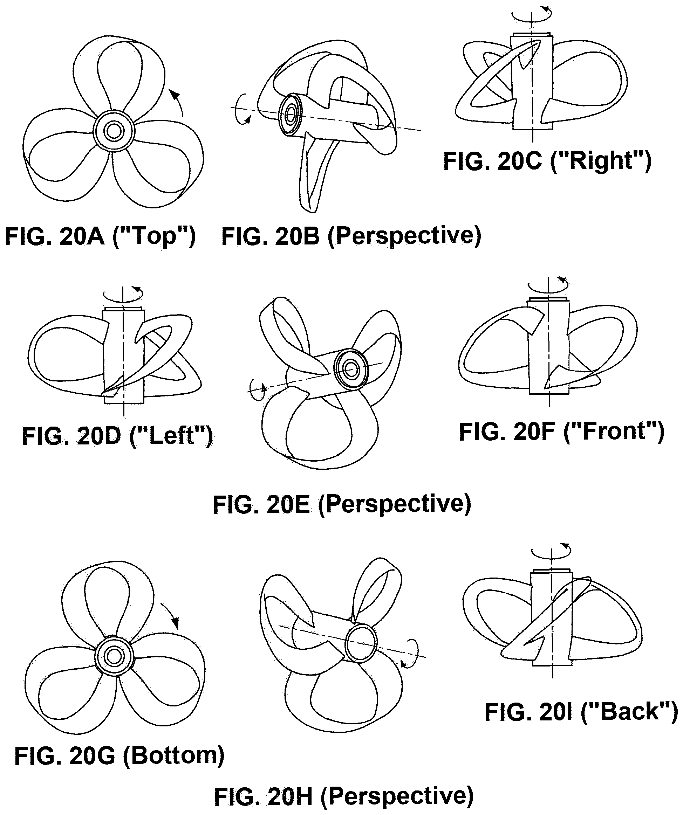

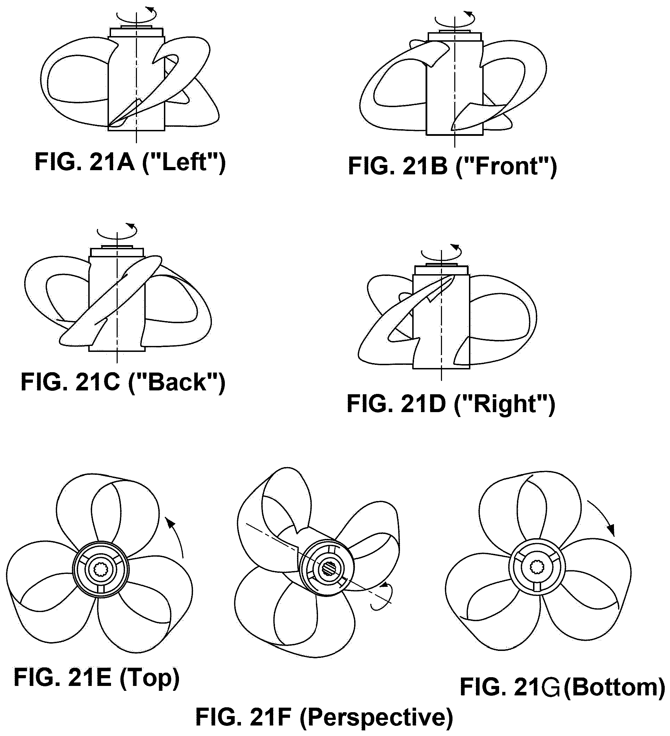

Various examples and view of illustrative propellers are provided in FIGS. 18A-F, FIGS. 19A-F, FIGS. 20A-I and FIGS. 21A-F. Views including from the top, bottom, "front," "back," "left," "right," and perspective views are provided and labeled on the drawings. The terms "left," "right," "front" and "back" are used for description purposes only to distinguish views from 90 degree intervals around the propeller, but as a circular device, the terms have no significance. FIGS. 18A-F depict an illustrative example of a propeller with a high rake value for intake portion of the blade. FIGS. 19A-F depict a further illustrative example of a propeller with a high rake value for intake and exhaust. FIGS. 20A-I depict an inboard propeller. FIGS. 21A-F depict a propeller with a through hub exhaust for an outboard motor.

## Claims

1. A method of manufacturing a propeller (100) having a plurality of blades (400), each of the plurality of blades (400) having an intake portion (406), an exhaust portion (426), and a tip portion (404) extending from the intake portion (406) to the exhaust portion (426), the method comprising:
defining a plurality of parameter sections by selecting some of the parameters including skew angle, roll angle, rake, radius, pitch angle, vertical angle values;
defining a parameter section at the transition from the intake portion (406) to the tip portion (404) by parameters to cause the amount of non-axial lift in the tip portion (404) to be greater than the axial lift in the tip portion (404);
defining parameter sections to include a roll value of 90 degrees in the tip portion (404); and
extrapolating between parameter sections to form smooth lines to form a blade configured to form a loop when attached to a hub (128).

2. The method of claim 1 comprising aligning the parameter sections along a non-helical median line.

3. The method of claim 1 or 2 further comprising forming the hub (128) having a plurality of the blades (400) extending outward from the hub (128) and disposed around the hub (128).

4. The method of one of the preceding claims comprising defining one or more parameters for parameter sections in the intake portion (406) to cause the amount of non-axial lift in the intake portion (406) to be less than the non-axial lift in tip portion (404) and/or defining one or more parameters for parameter sections in the exhaust portion (426) to cause the amount of non-axial lift in the exhaust portion (426) to be less than the non-axial lift in the tip portion (404).

5. The method of one of the preceding claims comprising selecting parameters including average pitch angle of the exhaust portion (426) of the blade greater than the average pitch of the intake portion (406) and/or selecting parameters such that a root of the intake portion (406) is forward of a root of the exhaust portion (426) when extending outward from the hub (128), and skew begins at zero and ends at a positive value.

6. The method of one of the preceding claims comprising selecting parameters including pitch angle of the exhaust portion (426) at its root greater than pitch angle of the intake blade at its root.

7. The method of one of the preceding claims comprising selecting parameters for parameter sections such that the tip portion (404) has a 90 degree roll angle closer to the exhaust portion (426) than to the intake portion (406).

8. The method of one of the preceding claims comprising selecting parameters including a zero vertical angle throughout the tip portion (404).

9. The method of one of the preceding claims comprising selecting parameters including a pitch angle of the exhaust portion (426) at its root end less than a pitch angle of the intake portion (406) at its root end.

10. The method of one of the preceding claims wherein the parameter sections are planar.

11. The method of one of the preceding claims comprising selecting parameters to form a blade having an average non-axial lift greatest in the tip portion (404) as compared to either in the intake portion (406) or the exhaust portion (426), and the intake portion (406) is 0 - 45% of the blade, the tip portion (404) is 30% - 75% of the blade and the exhaust portion (426) is 50% to 90% of the blade.

12. The method of one of the preceding claims comprising selecting parameters so in at least a portion of the tip portion (404) of the blade before a 90 degree roll and toward the intake end of the tip portion (404), the distance (N) to a parameter cross-section nose as would be measured perpendicularly from a rotational axis to which the blade extends outward is greater than distance (T) to a parameter cross-section tail as measured perpendicularly from the rotational axis; and wherein 80% of the tip portion (404) has a roll value of less than 90 degrees and N is greater than T for the same 80% of the tip portion (404).

13. The method of one of the preceding claims comprising selecting parameters including a non-zero pitch angle throughout the tip portion (404).

14. The method of one of the preceding claims comprising selecting parameters including an average vertical angle for parameter sections in the exhaust portion (426) greater than an average vertical angle for parameter sections in the intake portion (406).

15. The method of one of the preceding claims comprising selecting parameters including rake of parameter sections increasingly negative from a root of the intake portion (406) root through the first 30 percent to 40 percent of the blade, then increasing for the next 10 percent to 15 percent of the blade until it reaches positive values and continues to increase for an additional 20 percent to 40 percent of the blade and then level off for the remainder of the blade or decrease.

## Patentansprüche

1. Verfahren zur Herstellung eines Propellers (100) mit einer Vielzahl von Blättern (400), wobei jedes der Vielzahl von Blättern (400) einen Einlassabschnitt (406), einen Auslassabschnitt (426) und einen Spitzenabschnitt (404) aufweist, der sich vom Einlassabschnitt (406) zum Auslassabschnitt (426) erstreckt, wobei das Verfahren aufweist:
Definieren einer Vielzahl von Parameterabschnitten durch Auswählen einiger der Parameter, einschließlich Schrägungswinkel, Rollwinkel, Neigungswinkel, Radius, Neigungswinkel, vertikale Winkelwerte;
Definieren eines Parameterabschnitts am Übergang vom Einlassabschnitt (406) zum Spitzenabschnitt (404) durch Parameter, um zu bewirken, dass der Betrag des nicht-axialen Auftriebs im Spitzenabschnitt (404) größer ist als der axiale Auftrieb im Spitzenabschnitt (404);
Definieren von Parameterabschnitten, die einen Rollwert von 90 Grad im Spitzenabschnitt (404) enthalten; und
Extrapolieren zwischen Parameterabschnitten, um glatte Linien zu bilden, um ein Blatt zu bilden, das so konfiguriert ist, dass es eine Schleife bildet, wenn es an einer Nabe (128) angebracht ist.

2. Verfahren nach Anspruch 1, das das Ausrichten der Parameterabschnitte entlang einer nicht-helikalen Mittellinie aufweist.

3. Verfahren nach Anspruch 1 oder 2, das ferner das Ausbilden der Nabe (128) mit einer Vielzahl der Blätter (400) umfasst, die sich von der Nabe (128) nach außen erstrecken und um die Nabe (128) herum angeordnet sind.

4. Verfahren nach einem der vorstehenden Ansprüche, aufweisend das Definieren eines oder mehrerer Parameter für Parameterabschnitte in dem Einlassabschnitt (406), um zu bewirken, dass der Betrag des nicht-axialen Auftriebs in dem Einlassabschnitt (406) kleiner ist als der nicht-axiale Auftrieb in dem Spitzenabschnitt (404), und/oder das Definieren eines oder mehrerer Parameter für Parameterabschnitte in dem Auslassabschnitt (426), um zu bewirken, dass der Betrag des nicht-axialen Auftriebs in dem Auslassabschnitt (426) geringer ist als der nicht-axiale Auftrieb im Spitzenabschnitt (404).

5. Verfahren nach einem der vorstehenden Ansprüche, aufweisend das Auswählen von Parametern, die einen durchschnittlichen Anstellwinkel des Auslassabschnitts (426) des Blattes größer als die durchschnittliche Anstellwinkel des Einlassabschnitts (406) umfassen, und/oder das Auswählen von Parametern, so dass eine Wurzel des Einlassabschnitts (406) vor einer Wurzel des Auslassabschnitts (426) liegt, wenn sie sich von der Nabe (128) nach außen erstrecken, und die Schrägstellung bei Null beginnt und bei einem positiven Wert endet.

6. Verfahren nach einem der vorstehenden Ansprüche, das das Auswählen von Parametern umfasst, die einen Neigungswinkel des Auslassabschnitts (426) an seiner Wurzel größer als den Neigungswinkel des Einlassblatts an seiner Wurzel beinhalten.

7. Verfahren nach einem der vorstehenden Ansprüche, das das Auswählen von Parametern für Parameterabschnitte umfasst, so dass der Spitzenabschnitt (404) einen 90-Grad-Rollwinkel näher am Auslassabschnitt (426) als am Einlassabschnitt (406) aufweist.

8. Verfahren nach einem der vorstehenden Ansprüche, das das Auswählen von Parametern umfasst, die einen vertikalen Winkel von Null über den gesamten Spitzenabschnitt (404) hinweg aufweisen.

9. Verfahren nach einem der vorstehenden Ansprüche, das das Auswählen von Parametern umfasst, die einen Neigungswinkel des Auslassabschnitts (426) an seinem Wurzelende kleiner als einen Neigungswinkel des Einlassabschnitts (406) an seinem Wurzelende umfassen.

10. Verfahren nach einem der vorstehenden Ansprüche, wobei die Parameterabschnitte eben sind.

11. Verfahren nach einem der vorstehenden Ansprüche, aufweisend das Auswählen von Parametern, um ein Blatt zu bilden, das einen durchschnittlichen nicht-axialen Auftrieb aufweist, der in dem Spitzenabschnitt (404) größer ist als entweder in dem Einlassabschnitt (406) oder dem Auslassabschnitt (426), und wobei der Einlassabschnitt (406) 0 bis 45 % des Blattes beträgt, der Spitzenabschnitt (404) 30 % bis 75 % des Blattes und der Auslassabschnitt (426) 50 % bis 90 % des Blattes beträgt.

12. Verfahren nach einem der vorstehenden Ansprüche, aufweisend das Auswählen von Parametern so, dass in mindestens einem Abschnitt des Spitzenabschnitts (404) des Blattes vor einer 90-Grad-Drehung und in Richtung des Einlassendes des Spitzenabschnitts (404) der Abstand (N) zu einem Parameterquerschnitt an der Nase, gemessen senkrecht von einer Drehachse, zu der sich das Blatt nach außen erstreckt, größer ist als der Abstand (T) zu einem Parameterquerschnitt am Ende, gemessen senkrecht von der Drehachse; und wobei 80 % des Spitzenabschnitts (404) einen Rollwert von weniger als 90 Grad aufweisen und N größer ist als T für dieselben 80 % des Spitzenabschnitts (404).

13. Verfahren nach einem der vorstehenden Ansprüche, aufweisend das Auswählen von Parametern, die einen von Null verschiedenen Neigungswinkel über den gesamten Spitzenabschnitt (404) einschließen.

14. Verfahren nach einem der vorstehenden Ansprüche, aufweisend das Auswählen von Parametern, die einen durchschnittlichen Vertikalwinkel für Parameterabschnitte im Auslassabschnitt (426) einschließen, der größer ist als ein durchschnittlicher Vertikalwinkel für Parameterabschnitte im Einlassabschnitt (406).

15. Verfahren nach einem der vorstehenden Ansprüche, das das Auswählen von Parametern umfasst, die einen Anstellwinkel von Parameternabschnitten umfassen, der von einer Wurzel des Einlassabschnitts (406) über die ersten 30 bis 40 Prozent des Blattes zunehmend negativ ist, dann für die nächsten 10 bis 15 Prozent des Blattes erhöht wird, bis sie positive Werte erreicht, und für weitere 20 bis 40 Prozent des Blattes weiter erhöht wird und dann für den Rest des Blattes abflacht oder abnimmt.

## Revendications

1. Procédé de fabrication d'une hélice (100) comportant plusieurs pales (400), chacune des plusieurs pales (400) ayant une partie admission (406), une partie échappement (426), et une partie de pointe (404) s'étendant de la partie admission (406) à la partie échappement (426), le procédé comprenant les opérations suivantes:
définir une pluralité de sections de paramètres en sélectionnant certains des paramètres, notamment l'angle d'inclinaison, l'angle de roulis, le râteau, le rayon, l'angle de tangage, les valeurs d'angle vertical ;
définir une section de paramètres à la transition entre la partie admission (406) et la partie de pointe (404) par des paramètres qui font que la portance non axiale dans la partie de pointe (404) est supérieure à la portance axiale dans la partie de pointe (404) ;
définir des sections de paramètres pour inclure une valeur de roulis de 90 degrés dans la partie de pointe (404) ; et
extrapoler entre les sections de paramètres pour former des lignes lisses afin de former une pale configurée pour former une boucle lorsqu'elle est fixée à un moyeu (128).

2. Procédé selon la revendication 1 comprenant l'alignement des sections de paramètres le long d'une ligne médiane non hélicoïdale.

3. Procédé selon les revendications 1 ou 2 comprenant en outre la formation du moyeu (128) avec une pluralité de pales (400) s'étendant vers l'extérieur du moyeu (128) et disposées autour du moyeu (128).

4. Procédé selon l'une des revendications précédentes comprenant la définition d'un ou plusieurs paramètres pour les sections de paramètres dans la partie admission (406) pour faire en sorte que la quantité de portance non axiale dans la partie admission (406) soit inférieure à la portance non axiale dans la partie de pointe (404) et/ou la définition d'un ou plusieurs paramètres pour les sections de paramètres dans la partie échappement (426) pour faire en sorte que la quantité de portance non axiale dans la partie échappement (426) soit inférieure à la portance non axiale dans la partie de pointe (404).

5. Procédé selon l'une des revendications précédentes comprenant la sélection de paramètres incluant un angle de tangage moyen de la partie échappement (426) de la pale qui soit supérieur au calage moyen de la partie admission (406) et/ou la sélection de paramètres tels qu'une racine de la partie admission (406) soit en avant d'une racine de la partie échappement (426) lorsqu'elle s'étend vers l'extérieur du moyeu (128), et que l'inclinaison parte de zéro et se termine par une valeur positive.

6. Procédé selon l'une des revendications précédentes comprenant la sélection de paramètres incluant un angle de tangage de la partie échappement (426) à sa racine qui soit supérieur à l'angle de tangage de la pale d'admission à sa racine.

7. Procédé selon l'une des revendications précédentes comprenant la sélection de paramètres pour les sections de paramètres de sorte que la partie de pointe (404) a un angle de roulis de 90 degrés plus proche de la partie échappement (426) que de la partie admission (406).

8. Procédé selon l'une des revendications précédentes comprenant la sélection de paramètres incluant un angle vertical nul dans toute la partie de pointe (404).

9. Procédé selon l'une des revendications précédentes comprenant la sélection de paramètres comprenant un angle de tangage de la partie échappement (426) à son extrémité de racine inférieur à un angle de tangage de la partie admission (406) à son extrémité de racine.

10. Procédé selon l'une des revendications précédentes dans lequel les sections des paramètres sont planes.

11. Procédé selon l'une des revendications précédentes comprenant la sélection des paramètres pour former une pale ayant une portance moyenne non axiale plus grande dans la partie de pointe (404) que dans la partie admission (406) ou la partie échappement (426), et la partie admission (406) correspond à 0 - 45 % de la pale, la partie de pointe (404) correspond à 30 - 75 % de la pale et la partie échappement (426) correspond à 50 - 90 % de la pale.

12. Procédé selon l'une des revendications précédentes comprenant la sélection des paramètres de sorte que dans au moins une partie de la partie de pointe (404) de la pale avant un roulis de 90 degrés et vers l'extrémité d'admission de la partie de pointe (404), la distance (N) à un paramètre de section de nez telle qu'elle serait mesurée perpendiculairement à un axe de rotation vers lequel la pale s'étend vers l'extérieur est supérieure à la distance (T) à un paramètre de section de queue telle qu'elle est mesurée perpendiculairement à l'axe de rotation ; et dans lequel 80% de la partie de pointe (404) a une valeur de roulis inférieure à 90 degrés et N est supérieur à T pour les mêmes 80% de la partie de pointe (404).

13. Procédé selon l'une des revendications précédentes comprenant la sélection de paramètres incluant un angle de tangage non nul dans toute la partie de la pointe (404).

14. Procédé selon l'une des revendications précédentes comprenant la sélection de paramètres comprenant un angle vertical moyen pour les sections de paramètres dans la partie échappement (426) supérieur à un angle vertical moyen pour les sections de paramètres dans la partie admission (406).

15. Procédé selon l'une des revendications précédentes comprenant la sélection de paramètres incluant une inclinaison des sections de paramètres de plus en plus négative à partir de la racine de la partie admission (406) sur les premiers 30 à 40 % de la pale, puis augmentant pour les 10 à 15 % suivants de la pale jusqu'à ce qu'elle atteigne des valeurs positives et continue d'augmenter sur 20 à 40 % supplémentaires de la pale, avant de se stabiliser (ou de diminuer) sur le reste de la pale.
